# EUROPEAN PATENT SPECIFICATION

(11) **EP 1 371 220 B1**
(45) Date of publication and mention of the grant of the patent: **10.01.2007**
(21) Application number: 02718192.4
(22) Date of filing: 13.03.2002
(51) Int. Cl.: H04M 15/00, H04M 17/00, H04L 12/14

(54) **METHOD OF PROVIDING NETWORK SERVICES**
VERFAHREN ZUR VERFÜGUNGSTELLUNG VON VERMITTLUNGSDIENSTEN
PROCEDE POUR FOURNIR DES SERVICES DE RESEAU

(30) Priority: 22.03.2001 EP 01107141
(43) Date of publication of application: 17.12.2003
(73) Proprietor: NORTEL NETWORKS CORPORATION, Montreal Quebec H2Y 3Y4 (CA)
(72) Inventor: REITH, Lothar, 60596 Frankurt (DE); PUTALA, Marian, 65817 Eppstein (DE)
(74) Representative: Köllner, Malte
(86) International application number: PCT/EP2002/002813
(87) International publication number: WO 2002/078316

(56) References cited:
- WO-A-00/30008
- WO-A-00/69118
- WO-A-01/78316
- WO-A-01/82163
- WO-A-02/09009
- US-A- 5 822 411
- US-A- 5 950 125
- US-B1- 6 185 414
- US-B1- 6 256 299

## Description

### BACKGROUND OF THE INVENTION

The invention relates to a method of providing telecommunications services, wherein users are authenticated and authorized to a first service profile before a user session with a network service switch starts.

More particularly, the invention relates to a method of providing telecommunications services to authenticated users with flexible billing options such as prepaid or postpaid in realtime, near-realtime, or non-realtime. The method applies to all telecommunications services, where users which are identified with a user-ID or any other unique identification are authenticated before the start of a user session with a network service switch in a way that allows to present a bill to the owner (subscriber) of the User-ID, which the subscriber will be obliged to pay under normal circumstances (no repudiation).

The following are examples of User-IDs, where the method applies.
1) "Username" - in RADIUS Accounting Start Request and RADIUS Accounting Stop Request Of Internet Protocol (IP) dial-in services and other Internet Access Services using the dial-in paradigm, including also Ethernet access according to the IEEE 802.1x standard and according to Ethernet UNI service definitions. It should be noted that for authentication an additional authentication token such as a password is required when authenticating using the standard RADIUS protocol (RADIUS = Remote Authentication Dial-in User Service)
2) "IMS" - International Mobile Subscriber Identification. It should be noted that the proliferation of the "IMSI" by a mobile network implies the user has already been pre-authenticated successfully, therefore no separate password or other authentication token is required.
3) "CLID" Calling Line Identification in the PSTN identifying who originated the telephone or online dialup call. Again, the CLID has already been pre-authenticated and it's presence in a call setup request (such as an SS7 LAM - Initial Address Message) is therefore alone sufficient for authentication of the user.

If accounting or billing applies, then a "user session" may be defined as follows: The session starts when the billing system is informed by a network element, that accounting (and thus real-time billing) shall take effect for this user immediately (e.g.. via a RADIUS accounting e.g. start request sent to an external RADIUS Server or accounting service logic, or by creation of one or multiple prepaid accounts or credit_counters inside the NSS.). Alternatively, if the network element provides an accurate time stamp, the session starts at the time of the time stamp. The session ends, when the billing system is informed by the network element, that accounting (and thus real-time billing) shall stop for this user immediately (e.g. via a RADIUS accounting stop request). Alternatively, if the network element provides an accurate time stamp, the session ends at the time of the time stamp. Of course, Online Sessions" are covered where a user or device obtains for the duration of the Online Session an IP adress or a portion of an IP adress (when using Network Adress Translation) that allows the user to be reachable from other IP adresses.

Also included are Ethernet sessions, that allow a user or device to communicate over an Ethernet LAN using a certain MAC adress - optionally after the user or device has been successfully authenticated according to IEEE 802.1x standard. In addition, a session may be interpreted as a full Ethernet segment or a VLAN when offering Ethernet VPN services or Ethernet UNI services with Real Time Billing - such as implemented in the applicants OPTera Metro 1200 or OPTera Metro 8000 products.

When a user subscribes to a telecommunications service, a user-ID will be assigned and a user record will be stored in a user database, which will allow the service provider to store: the data required for producing the bill and to retrieve this data for billing purposes using the user-ID as key for efficiently accessing the database.

The network element which originates the accounting start request at the beginning of the session and the accounting stop request at the end of the session is called Network Service Switch (NSS). The NSS sends an accounting start request after the user has been successfully authenticated and has been authorized with an (initial) service policy. The NSS forms the subscriber edge of an IP network or an Ethernet UNI Service, for example, (UNI = User Network Interface) and enforces the service policy that the user has subscribed to. Access to the NSS may be achieved through various telecommunication systems, either over wireless access networks (e.g. UMTS, GPRS. GSM. CDMA, wireless LAN. satellite, etc.), or over wireline networks (e.g. xDSL, ATM, cable networks. Frame Relay networks. IP based access networks. Frame Relay, leased line (PDH or SDH), fiber networks, Ethernet networks, or the Public Switched Telephone Network (PSTN) via dial-methods). In case the access network is itself already IP based, standard tunneling protocols such as L2TP (layer 2 tunneling protocol) or PPP over Ethernet, or GTP in UMTS or GPRS networks may be used to move the subscriber edge to the NSS (Network Service Switch).

During user authentication, the user sends his user-ID and optionally also an authentication token such as a password to the NSS. In case the user has already been pre-authenticated in the access network (which could belong to the same or a different service provider), it may be sufficient for authentication that the user or the other service provider sends his user-ID). This would usually be sufficient, if the access network belongs to the same service provider or if an inkasso agreement existed between the service providers, that would allow the service provider to bill via the service provider of the access network,

The NSS may have a policy to always successfully authenticate users with pre-authenticated user-IDs. For example, this is often the case in telephone networks offering so-called open call by call services as available in Germany. Alternatively, the NSS may have a policy to only successfully authenticate pre-authenticated user-IDs which are also listed on a so-called white list provisioned by the service provider with the user-IDs of subscribers. For example this is the case for so-called closed call by call services offered by many German operators only to users that have previously subscribed to the service with the alternate operator.

Alternatively, die NSS may have a policy to not always successfully authenticate, rather authenticate the user only when in addition an authentication token is provided such as a password or one of the other examples listed below, which can be checked using a local or remote user database, and the user will only be successfully authenticated, if the user-ID and authentication token provided are fully matching (or at least sufficiently enough in case of biometric data based authentication tokens) with database entries for the user-ID and an associated authentication token (e.g. password, Secure-ID, biometric information identifying the user, such as data on the iris structure of the user's eyes, data on the user's fingerprint, data on the user's voice characteristics for automatic speaker recognition etc.).

In traditional telecommunications networks, the user database was often local to the NSS - such as in case of the NSS being a traditional TDM voice switch. In modem telecommunications networks, the user database is often kept centrally and is not local to the NSS. Therefore, user authentication involves communication to a remote database. This communication may be governed by standard protocols, such as most importantly the RADIUS protocol (Remote Access Dial In User Service) defined by the IETF (Internet Engineering Task Force). While the RADIUS protocol well defines the so-called process of AAA (Authentication, Authorization and Accounting) between a RADIUS client (the NSS) and a RADIUS server (the application having access to the user database), it does not provide any means to invoke a re-authorization with a new service profile during a session. Until very recently there was not even a way to disconnect by initiative of the database, only very recently has a functionality been added for a RADIUS Disconnect Request, which allows to implement more flexible prepaid solutions.

Particularly, when offering IP Services, an example of an NSS is the applicant's "Shasta 5000 BSN". ("BSN" stands for Broadband Service Node). The BSN is designed to be-located at the "subscriber edge" of a service provider offering IP services, at the strategic point where the subscriber meets the IP network of the service provider. On the BSN, IP-Services can be provisioned and enforced on a per-subscriber basis. Also, service profiles can be defined for individual users or classes of users, which will be assigned to a user after successful authentication during a so-called authorization. Prior to this invention, service profiles have always been static throughout a user session of authenticated users. There have been applications for changing the service profile from an initial default profile in the context of cost effective DSL service deployment. This feature may be used to allow for self-provisioning in the context of initial service subscription of DSL customers (when they connect for the first time the DSL modem purchased in a retail store). This is achieved by the NSS's capability to enforce a service profile that drops all other traffic except HTTP traffic to a certain IP address representing the server for initial sign up of the so-far unauthenticated users. Once the user has provided sufficient information that allows to authenticate him in that moment (which will then be stored in a user database for future authentication purposes), the user will be authorized for the first time with a user selected service profile. It is therefore important to note, that prior to this invention, no service provider has ever re-authorized an authenticated user with a different service profile, particularly not in the IP Services or, more generally, packet switched network services such as, Ethernet Service, ATM Services and Frame Relay Services domain. "Voice over IP", SIP, etc., and particularly not with true real time billing of volume rated services that include differentiated volume rates depending on the type of packet.

For the services rendered during the session, the user will in most cases be billed on a time basis. This means that the amount of money with which the user will be charged for the session depends upon how long the session has lasted. However, the price may also depend upon other criteria, for example, on the volume of data that have been sent to the user during the session. In any case, there will be one or more types of service units (e.g. time or volume) which each have a certain price given in any suitable currency. In a postpaid system, the value of the service units consumed by the user will be recorded on an account, and the user will be billed later on the basis of this account. On the other hand, prepaid systems are known in which the user is credited in advance a certain amount of money which must be paid either in advance or later, and the account of the user will then be decremented in accordance with the value of the service units being consumed. When the user fails to reload his account and the account becomes depleted, the user will be disconnected from the network, or switched to another service profile, such as to a service which limits the user to access the recharging server and/or advertising information.

It will be understood that the price that the user has to pay will depend upon the service profile to which the user has subscribed. The service profile is defined by a set of user service parameters which specify the so-called user service policy. This user service policy may encompass a variety of different aspects the most important of which are listed below:

### QoS policy:

The policy governing the Quality of Service provided to the user, e.g. in terms of bandwidth provided or priority given to data from this user (for example regarding the setting of precedence and drop priority in the TOS field (Type of Service) of IP packets to implement differentiated services according to DiffServ standards or regarding a guaranteed bandwidth available to the user.

### Accounting policy:

The policy governing the way the accounting and billing is done, specifying among others the billed items (i.e. the service units, volume or time or other) on which billing is based, the accuracy of the bill (for example, whether time is billed in minutes or seconds), the payment mode, prepaid or postpaid, postpaid payment ceiling, the applicable tariff, bill presentation policy (for example in real time in the browser or only when the user accesses a special website; further, whether only the current tariff is displayed or also the current state of the prepaid account or current accumulated amount of charges, e.g. for a monthly postpaid bill, recharging policy (e.g. if recharging the prepaid account with credit card is possible), etc.

### Privacy/accountability policy:

The policies governing, on the one hand, the extent of data collected on the user's behavior and the amount of user information visible to communication partners of the user, and, on the other hand, the extent of data collected to allow the user to challenge the correctness of a bill. For example, a user may not want the service provider to collect data on the type of packets that are forwarded on the user's behalf, as this may violate privacy requirements of the user. On the other hand, the service provider may want to apply a tarif that charges differentiated volume rates depending on the type of packet (value based volume oriented billing). Today there is no solution available that meets both the privacy requirement of the user and the commercial requirement of the service provider to introduce value based realtime billing including for prepaid users. A solution to this problem is a privacy mode service that is characterized in that a service profile is used with a plurality of payment rules of a certain payment type, which are applied to a single credit_counter of the user. Another privacy policy may govern the extend to which the user is subject to anonymization services of the service provider, such as IP adress hiding by adress translation, Cookie suppression, removal of html tags that provide information on previously visited websites etc.

### IP-Services Policy:

The policy governing which IP services the user is allowed to use (for example: http for WWW. Voice over IP; FTP, Telnet, smtp, etc.).

Other examples include the direction of the IP packets of certain type (egress from network to user or ingress from user to network), the class of IP adress of the user (if the service provider encodes information in the IP adress range from which he assigns the IP adress to the user, allowing for example to differentiate a GRPS user a UMTS user and a dialup user with V.110 to be differentiated when terminated on the same NSS). The policy may also differentiate by the destination IP adress, which may be used for content filtering of Service Profiles for children.

### Security policy:

The policy governing the extent to which the user is protected by the service provider against security hazards, for example by network-based firewalls and the like or by encryption of user communication.

### Content policy:

The policy governing which content and/or websites the user is allowed to access.

Conventionally, these policies defined by the service profile are static at least throughout a session. Only in the exceptional case of so-called self-provisioning systems, in which an unauthenticated user has the possibility to subscribe online, a new subscriber is at first authorized to a restricted service profile which allows only to enter the necessary data for provisioning the service. Then, once the service profile has been specified, this profile will be fixed for the session to start and for any future sessions of the same user, in particular for volume billed services and for prepaid services that include volume based billing with multiple differentiated rates that depend on the type of packet.

US 5 822 411 A, for example, describes a telecommunications charging system wherein, when a call has been established between a calling party and a called party, at least one of the calling and called party has the option to enter a request for changing the service profile of the call connection during the call. However, in this context the term "service profile" relates only to features of the call connection, such as called party billing, that are valid during this specific call.

### SUMMARY OF THE INVENTION

It is an object of the invention to provide a method of providing telecommunications services, which offers more flexibility in adapting service profiles to the demands of users, service providers and other participants in the network.

According to the invention, this object is achieved by a method in which the service profile is dynamically varied in the course of the session after the logon procedure.

Thus, once a user has been authenticated to a session, the user may easily switch to another service profile without having to leave the current session and to start a new session. As a result, one and the same session may be segmented into a plurality of sub-sessions to which different service profiles apply. The benefit for the user may be illustrated by the following simple example:

Imagine that the user has logged on to a relatively cheap or even cost-free service profile. In the course of the session using this profile, the user arrives at a website where a file with a very large data volume is offered for download. Since the current service profile provides only a poor Quality of Service, e.g. a limited bandwidth and a low priority for the data packets to be transmitted, the download procedure would be unreasonably time-consuming. Now, the user may simply enter a command to upgrade the service profile to a more expensive profile which provides however a significantly higher QoS, so that the download procedure will be accelerated. After this, the user may choose to return to the cheaper mode in order to continue with "surfing" on the Internet.

On the other hand, it is not only the user but also the service provider who may take the initiative to change the service profile. The service provider may use this feature among others for offering services that can at least partly be financed by more efficient advertising.

Today, advertising on the Internet appears mainly in the form of banners which occupy only a small fraction of the web pages visible on the screen. However, since the users tend to ignore the advertising banners and will focus on the main contents of the web pages or will rapidly click-on to another page, this kind of advertising is significantly less efficient than for example advertising on Free-TV channels, where the regular program is interrupted by advertising spots, so that the viewer is forced to watch the advertising spots, and his attention is not distracted by other contents. The invention provides a tool with which this advertising model can easily be implemented on the Internet. To this end, an advertising break consisting of a predetermined sequence of part-screen or full-screen advertisements and/or multimedia advertising spots is defined as a specific service profile governing the full advertising break, or a predetermined sequence of service profiles where the sequence can be dynamically adapted. When the user has worked with his previous or default service profile for a certain time, the Internet Service Provider forcibly switches to the service profile "advertising break", so that the user is forced to watch the advertising before he can continue with his own service profile. The profile "advertising break" may also include interactive elements permitting the user to select advertising on a specific topic in which he is particularly interested. This is beneficial for the advertiser, because, in this way, the potential clients can be targeted more precisely. In order to give an additional incentive for the user to deal with the advertising, the advertising break may also include games, prize-competitions and the like. Moreover, the service profile may permit links to the web pages of the companies in whose benefit the advertising has been made, so that the user may directly respond to the advertising and may order the corresponding goods and services.

It will be understood that the feature whether or not a service profile that has been selected by a user may be interrupted by an advertising break is again a feature which distinguishes service profiles from one another. Thus, the user may select a service profile which is relatively cheap but will be interrupted by advertising breaks from time to time, and when he becomes annoyed by the advertising breaks, he may, within the same session, choose to switch to a more expensive profile in which advertising breaks are forbidden, or are inserted periodically with a reduced frequency. Advertising insertion may be governed by service profiles that restrict the user to advertising content. Alternatively, advertising insertion may be performed by inserting additional packets with advertising information before, after or in between a stream of packets with same type, such as HTML packets for a pop-up window, VoIP packets with voice advertising, WAP packets for WAP advertising, etc. An external advertising insertion application may govern the advertising insertion and can be triggered by the arrival of a first packet of the respective type, after a period during which respective packets are forwarded without triggering the advertising insertion application. The period of advertising free rendering of service units may be have a fixed minimal length or may be determined by a number of advertising free service units (such as bytes) being rendered before the trigger will again be invoked with the next service unit being rendered to the user (time or packet). When using a single credit_counter object and multiple differentiated rates per service unit, which may depend on the type of packet, the advertising insertion free period of the session can be very flexibly defined honoring a mix of time and different packet type weights. The trigger will be issued by an action that is associated with a real time billing threshold. A local payment source application (local to the NSS) may be used to produce pseudo-payments which govern the behaviour of the local payment type (which uses pseudo payments of credits which do not represent a commercial value outside of the NSS, such as artificial packet weights associated with different packet types or a credit currency of seconds which may be used to terminate the advertising free period when the _{"}pseudo-timer" represented by a credit_counter using seconds as currency in the payment type gets depleeted or meets a threshold condition.

Advertising insertion by the service provider may also be controlled by a Real Time Billing with a real payment type, such that the advertiser is transferring payments to an account of the user and/or to an account of the service provider in return for service units (time or packets) that are associated with advertising content.

In case of a profile billed on a time basis, the user may find advertising breaks more acceptable when the advertising break is configured as a cost-free profile, and a corresponding message on the screen may advise the user that he will not be billed for the time he is watching the advertising spots. The user may even be rewarded for watching the advertisement by specifying in the service profile "advertising break" that the prepaid account of the user is not decremented, but, instead, is incremented for each minute or second he is watching the advertisement. Then, it may also be advantageous if the user has the option to switch to an "advertising break" profile voluntarily, in order to increase his account or earn credits of another payment_type, such as bonus points in a customer loyalty system. The customer may have the opportunity to earn and spend credits such as loyalty bonus points using a service profile that includes a minimum of one payment rule with a rate of a payment type that uses loyalty_bonus as credit currency. Negative rates will lead to earning of bonus miles, while positive rates will lead prepaid billing modes. Service units that are associated with a payment rule that has a negative rate lead to the user "earning" credits (such as Loyalty Bonus points) whereas positive rates lead to "spending" of credits. Credits may be earned and spend at the same time when using a service profile that contain payment rules which include both positive and negative rates of the same payment type.

In an existing network system, the method according to the invention may be implemented by installing, on behalf of the service provider, a piece of software which is called Session Manager Application (SMA) which ties together the authentication and authorization software, the user data base and the software controlling the selection of pre-configured service profiles or the dynamic provisioning of service profiles in the Network Service Switches. When the change from one service profile to another can be initiated by the user, the system will also include a "Content and Policy Selection Portal" (PSP) for handling the user instructions by which the service profile is changed.

Alternatively, a "Business to Subscriber" Interface Software application (B2S) may be used to initiate a change from one service profile to another. The B2S interface may interface directly to a user terminal with a physical control capability such as a button on a mobile handset that can be pushed to invoke a change to a specific service profile, or multiple buttons associated with specific service profiles. These buttons may be pre-configured by the manufacturer and the service provider, or software configured according to the individual users preferences. Alternatively, the B2S may interface to a software running on a terminal device used by the user, such as a browser on a PC, a micro browser on a mobile hand held device, a telephone set with a software controlled display etc. All these alternatives have in common the user can initiate a policy change via interfacing to the B2S application or to the PSP, which in turn manipulate the user database in order to inform the SMA of the requested change. These applications may directly interface to the SMA, or my interface via the user database. Changes to the database affect the user record of the user requesting a service policy change. The B2S application and also the PSP application also add the username to a special concatenated list of usernames, which have requested a policy change in case of interfacing via the user database. The SMA will check this list (or the application specific lists) regularly in very short intervals to ensure that the policy changes requested by the users will be implemented in near real-time.

Since the change from one service profile to another, be it initiated by the user or by the service provider, will in most cases have an impact on the accounting policy (at least on the applicable tariff or tariffs (rates)), the method according to the invention is preferably combined with a flexible and efficient accounting method. In a preferred embodiment, this accounting method is based on a prepaid system in which a prepaid account of the user is decremented in accordance with the service units being consumed. In this respect, however, the term "prepaid system" does not necessarily mean that the amount to be paid for loading the prepaid account must actually be paid in advance.

According to an advantageous embodiment, the records in the user data base will include for each prepaid account of a user one or multiple fields "Prepaid Account Decrementor", (rates) which indicate, in any suitable accounting units, the amount by which the prepaid account will be decremented for each service unit, e.g. for each minute or second in which the session has continued or for each byte contained in a received packet of a certain type. When using time rated tariffs, the currently applicable tariff is therefore equal to the number of real-time accounting units that are decremented at the beginning of each accounting step interval. When using volume rated tarifs, the current tariff (the rate) applicable to a certain type of packet indicates the number of accounting units that shall be decremented (or incremented) from (to) the users prepaid account. When multiple prepaid accounts are used and or when multiple different rates per packet type are used, these will be differentiated by the type of the prepaid account ( credit_counter) and the type of the rate. This type may also be referred to as payment_type or ptype, as it also specifies the type of accounting units used and the payment source for these accounting units (such as a payment service provider). When the service profile is changed, the accounting policy can easily be adapted by changing the entry in the "Prepaid Account Decrementor" or in a subset of all "Prepaid Account Decrementors" (rates) included in the new service profile, effectively applying new rates/new tariffs. It is even possible to change the entry in the Prepaid Account Decrementor, and hence the tariff, in each accounting step interval, depending on the contents that the user has been viewing or on the volume of data that have been transmitted to the user in the past interval.

According to an optional but particularly useful feature of the invention, accounting is achieved by way of transactions in which a certain amount of accounting units, which may be positive or negative, is transferred from one account to another. If, for example, the user is billed for session time on a per-minute basis, and the user may select between an expensive "first class" service profile in which advertising breaks are not permitted, and a cheaper "economy class" service profile in which advertising breaks are allowed, then the accounting method may involve a number of accounts in addition to the prepaid account of the user. One of these accounts will be dedicated to the "first class" profile, another one to the "economy class" profile, and yet another account to each of the companies or pools of companies that have ordered the advertising spots. Then, when the user has selected the "first class" profile, a high decrement will be set in the "Prepaid Account Decrementor", and after each accounting period of one minute, a corresponding amount will be transferred from the prepaid account to the "first class" account. When the user switches to the "economy class" profile, the entry in the "Prepaid Account Decrementor" will be decreased, and after each accounting period a corresponding smaller amount of accounting units will be transferred from the prepaid account to the "economy class" account. Thus, the various accounts will at any time indicate how much of the accumulated expenses of the user have been spent on the "first class" services and how much on the "second class" services. This more detailed information will be valuable not only for the user but also for the service provider. Further, during an advertising break, the "Prepaid Account Decrementor" may, for example, be set to a negative value, which means that the user is paid for watching the advertising spots. Then, (positive) amounts of a counting units will be transferred from the advertising accounts to the prepaid account of the user. As a result, the user can see at any time how much he has "earned" by watching the advertising, and, conversely, the advertising accounts may be used by the service provider for billing the companies who have ordered the advertising spots. In addition, these companies get valuable feedback information on the extent to which there advertising has been watched, and this information may be accessed online at any time.

Another useful application of the accounting method in conjunction with the dynamically varied service profiles is the support of sponsoring. If a person or company wants to sponsor user accesses in general or specific websites or contents that are offered on the Internet, a specific service profile may be created for this purpose. More specifically, the content policy defined by this service profile will limit the access to contents or websites which the sponsor wants to sponsor. Alternatively, packets destined to and/or originated from a sponsor's website may be rated with a negative tarif, thus increasing a prepaid account of a user, which could be a loyalty point account for example. Further, a sponsor account is provisioned as a prepaid account or postpaid account for which the sponsor will be billed. If the site is fully sponsored, then, after each accounting period, the decrement specified for this service will not be subtracted from the prepaid account of the user, but, instead, will be subtracted from the account of the sponsor. Alternatively, the same effect is achieved by still decrementing the prepaid account of the user with a negative amount (earning) while at the same time incrementing the same negative amount to the sponsor account - which over time leads to depletion of the sponsor account if not refilled. If the site is sponsored only partly, then a reduced decrement will apply to the prepaid account of the user, and the rest of the decrement will be subtracted from the account of the sponsor, effectively implementing 2 payment rules and 2 payment types. Optionally, a specific account for the sponsored profile is provisioned for the user, and the amounts subtracted from the account of the sponsor are added to the account for the sponsored profile, so that the user may check at any time how much he has obtained from the sponsor.

As an alternative, sponsoring may be achieved by transferring a limited amount of accounting units from the account of the sponsor to the prepaid account or to a specific sponsored account of the user at a time when the user switches to the sponsored profile. Then, after each accounting period, the decrement is subtracted either from the prepaid account of from the sponsored account, as long as the same is not depleted.

Alternatively to using special accounts that trigger an action on depletion, there may be multiple thresholds employed per account, where each threshold can trigger an action. Two types of thresholds are to be differentiated, one type that will terminate the current part session (critical threshold), and one type that will be used only for triggering an action whenever the threshold is being traversed.

Although the transaction-based accounting method described above is particularly useful in conjunction with dynamically varied service profiles, the field of application of the accounting method is not limited to this.

For example, the accounting method may also be used for safe and easy-to-handle payments, in B2B (Business to Business) or B2C (Business to Customer) e-business activities or even in P2P (Peer to Peer) transactions. This is particularly useful in conjunction with micropayments, i.e. with payments in which the amounts being paid are so small that the transaction costs of a normal payment mode such as a payment via credit card would be disproportionately high. If, for example, private users communicate with each other over the Internet by e-mail or within a chat room or within a news group, and one user wants to reward another user for having given a valuable information or having allowed him to download an interesting file, a payment equivalent to a small amount of money can be made by transferring a corresponding amount of accounting units. On behalf of the person receiving the payment, these accounting units may be added to the prepaid account. In a similar manner, payments may be made to - commercial Application Service Providers (ASP), to an information broker or the like. Thus, it would be possible for example for a commercial contents provider to provide an online dictionary or encyclopedia and to claim a small fee for each catchword that is looked up in the dictionary. The fee will then be paid in accounting units. As a value-added service, the Internet Service Provider may then act as a transaction mediator. The mediator bills the client user in legal currency for loading his personal prepaid account. The payments to the contents provider will accumulate on an account of the ASP, and this account will be balanced from time to time by converting the accounting units into legal currency and by transferring a corresponding amount in legal currency from the mediator to the contents provider. In this case, the accounting units used in the network accounting system will not only serve for billing purposes of the Internet Service Provider but will also have the function of a virtual currency for other business transactions.

The realtime accounting method described does not only apply to prepaid, but also for direct postpaid accounting and billing. Depending on the accounting mode, the SMA acts either as prepaid system or as postpaid system. It should be understood that the solutions presented herein are not limited to prepaid, but are at the same time applicable to postpaid as well. Whenever this document discusses prepaid, an equivalent postpaid solution can be derived as follows: When the prepaid system decrements (the tariff), a postpaid system will increment. When a prepaid system checks for account depletion, a postpaid system does not need to do that, however it will check if an optional payment ceiling has been reached. Once per month or per quarter a bill will be produced for postpaid customers, or alternatively in shorter intervalls. When using an accounting logic MPL that resides on the NSS itself, realtime postpaid billing refers to payment types that create real time postpaid CDRs in response to a threshold action which triggers the transfer of a payment to the payment source, payment mediator or to a payment service provider.

The accounting method according to an advantageous embodiment may also be used for statistical purposes in a broad sense. In this context, the accounts of an individual user may not only be linked to different service profiles but may also be linked to different categories of services and/or contents within the same profile. For example, there may be one or more accounts for different types of advertisements that the user has watched, an account for online purchases of the user, for which the Internet Service Provider gets a commission or which are profitable for the ISP in any other way, and the like. This will among others allow the Internet Service Provider to permanently rate the users as to their profitability. This may be attractive also in a flat rate scenario, in which the user is not billed per service units but pays a fixed monthly amount for having access to the network. In conjunction with dynamically changing service profiles, this rating information may be used for automatically switching profitable users to a more extended service profile or, conversely, for restricting the service profile of less profitable users. This rating procedure and its consequences may either be visible or invisible for the user.

Such statistical information may also be beneficial for the user, since it may be utilized, for example, for establishing an automatic fraud detection system, e.g. by implementing customer-visible or invisible payment ceilings or by monitoring for abnormal user behaviors which could hint to fraudulent usage.

The balance between privacy and accountability, i.e. the extent to which the behavior of the user can be tracked, will depend on the selection of user-specific and global accounts. User-specific accounts will allow to track the behavior of individual users with a resolution that depends on the definition of service categories and/or content categories represented by the different accounts. On the other hand, global accounts will only reflect the collective behavior of the users, without any possibility to identify the users who have used the corresponding services.

Another privacy mode is when multiple rates (decrementors) are applied to a single credit counter (or prepaid account). Thus, the information is lost, which service profile was used how long (in cast of a session with multiple part sessions, the information is intentionally lost how long the part sessions lasted and what the rate was in the part session), Similarly, when using volume based billing with multiple rates depending on the type of packet, a privacy mode may use only a single account (prepaid account or credit-counter) for incrementing the different rates, which leads to the situafion that the service provider will not need to track the user behaviour but still can apply differentiated volume rates with real time billing. This overcomes todays problem that too much billing information needs to be collected in order to offer such kind of services, which are also not accepted by the customers as they feel uncomformble with the service provider cracking their behaviour in detail.

The functionality that is enabled by the accounting method according to the invention leads to a variety of features which may again be used for specifying different service profiles. For example, the service profiles may be distinguished in terms of the policies described below:

### Advertising policy:

A policy which governs the way in which the user is exposed to (and forced to view) advertising, including for example the rate and length of advertising breaks interrupting the user's normal usage and forcing him to view the advertising, the kind of advertising, and whether or not targeted advertising is applicable to this user.

### Rating policy:

The policy governing the way a customer is rated for profitability to the service provider or for other criteria specified by the service provider. For example, if the rating is partly visible to the user via customer loyalty bonus points, the policy may also govern how to react to the rating of the user, e.g. by upgrading a profitable user to a better quality of service or downgrading a less profitable user to lower quality of service or a different advertising policy - of course always within the boundaries of the service contract.

### Fraud detection policy:

The policy governing invisible payment ceilings, classification of users according to normal usage patterns, user notification policy, etc.

Since the accounting method described above is not limited to the case that the service profile is varied dynamically, another aspect of the present invention relates to an accounting method for telecommunications services, wherein users consume telecommunications services in predefined service units having each a specific value that is express in accounting units, and each user has at least one account that is incremented or decremented essentially in real-time in accordance with the service units being consumed, comprising transactions in which a positive or negative amount of accounting units is transferred from an account of a user to another account.

In this context, the expression "essentially in real-time" means, that the accounting information is provided accurate and timely enough to be perceived by the service provider and/or the users or other participants to the network in real-time, when considering inevitable response times in the network based systems.

### BRIEF DESCRIPTION OF THE DRAWINGS

Preferred embodiments of the invention will now be described in conjunction with the drawings, wherein:
- Fig. 1: is a block diagram of a Multifunctional Prepaid System illustrating a first embodiment of the invention;
- Fig. 2: is a diagram of a Personal Prepaid Record (PPR);
- Fig. 3: is a flow chart illustrating the basic steps of the method according to the invention;
- Fig. 4: is a flow chart of an accounting routine;
- Fig. 5: is a simplified illustration of a user screen;
- Fig. 6: is a block diagram of a Realtime Billing System illustrating a second embodiment of the invention;
- Fig. 7: is an example of a billing policy employed in the Realtime Billing System;
- Fig. 8: is a function diagram of a rating step in the Realtime Billing System;
- Fig. 9: is a function diagram of an accounting and testing step in the Realtime Billing System; and
- Fig. 10: is a function diagram of a lease step in the Realtime Billing System.

### DESCRIPTION OF PREFERRED EMBODIMENTS

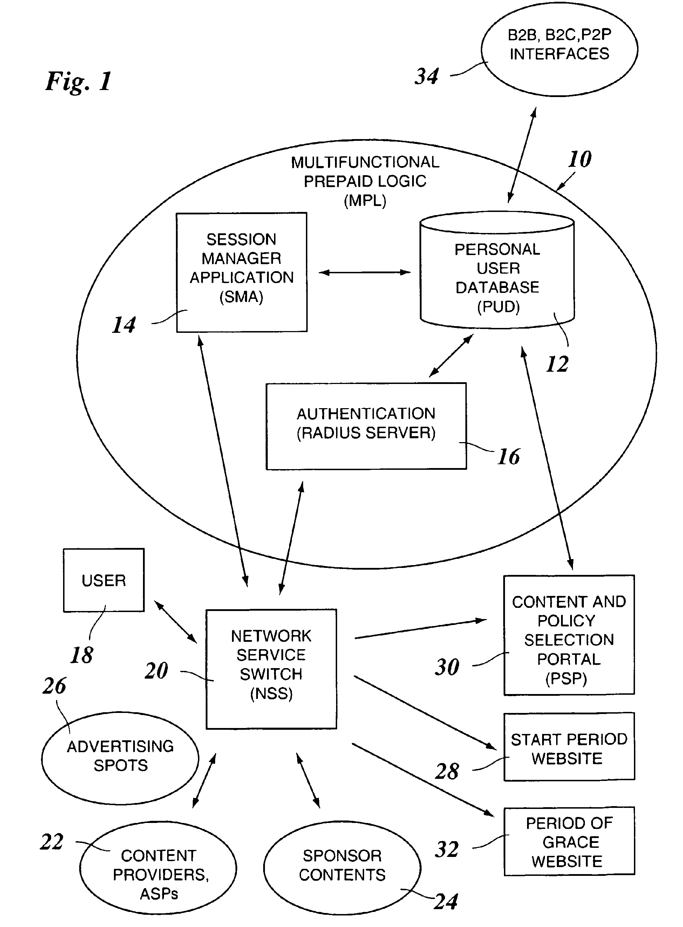

Figures 1 to 5 describe a Multifunctional Prepaid System as a first embodiment of the invention. This system is particularly useful for the real-time-accounting of B2B and B2C e-Business activities and of network access costs (over wireline and wireless networks) including privacy protection capability with multiple privacy modes and the capability for payment ceiling, sponsor-financing and advertising financing with the possibility for the interruption of unrestricted usage via advertising blocks with restricted alternate usage, as well as with the possibility for the fine-tuning of advertising campaigns in real-time according to regional or other anonymised customer data, as well as with the possibility for the user to change his usage profile within a usage session multiple times, including the applicable tariff and the applicable security policy and the applicable privacy policy, and also the possibility for the user to monitor the current service policy and the status of his related accounts in real-time.

The Multifunctional Prepaid System - in the following abbreviated as MPS - is a total system consisting of multiple hardware and software elements, which work together in a special way to deliver an extensive set of features as outlined above.

Fig. 1 shows the core elements of the Multifunctional Prepaid System as well as some complementing elements.

A Multifunctional Prepaid Logic 10 (abbreviated as MPL) comprises a database called Personal User Database 12 (abbreviated as PUD) and at least one application called Session Manager Application 14 (abbreviated as SMA) as well as at least one RADIUS server application 16 for authentication purposes. The MPL 10 implements the complete services logic describing the Internet users (subscribers) and other participants of the Multifunctional Prepaid System such as sponsors and advertisers. The Multifunctional Prepaid Logic is described in the database structure in conjunction with the execution principles of the Session Manager Application 14.

A user 18 accesses the MPL 10 via a Network Service Switch 20 (NSS). The NSS is controlled by the MPL 10 and determines the contents to which the user 18 has access. These contents may include the totality or a restricted selection of contents 22 that are accessible over the Internet, including contents hosted by content providers. Application Service Providers (ASP), streaming providers, and the like. A specific class of contents 24 has been shown separately. These contents 24 are sponsored by a sponsor, so that they can be watched at reduced costs or cost-free.

Another class of contents 26 consists of advertising spots that have been compiled by the service provider for the purpose of at least partly financing the services by advertising.

The service provider has further provided a number of special websites 28, 30 and 32, including a start period website 28 to which the user is forcibly directed when he logs on to the network. Another website 30 called "Content and Policy Selection Portal" (PSP) can be visited by the user at any time during the session and permits the user to change his service profile within the session.

If the prepaid account of the user is depleted, he is forcibly directed to a "period of grace website" 32 which advises the user that he has to reload his account or otherwise will be disconnected from the network.

The Multifunctional Prepaid Logic 10 is also accessible through a number of interfaces 34, such as B2B interfaces, B2C interfaces and P2P interfaces that will be used for various kinds of business transactions.

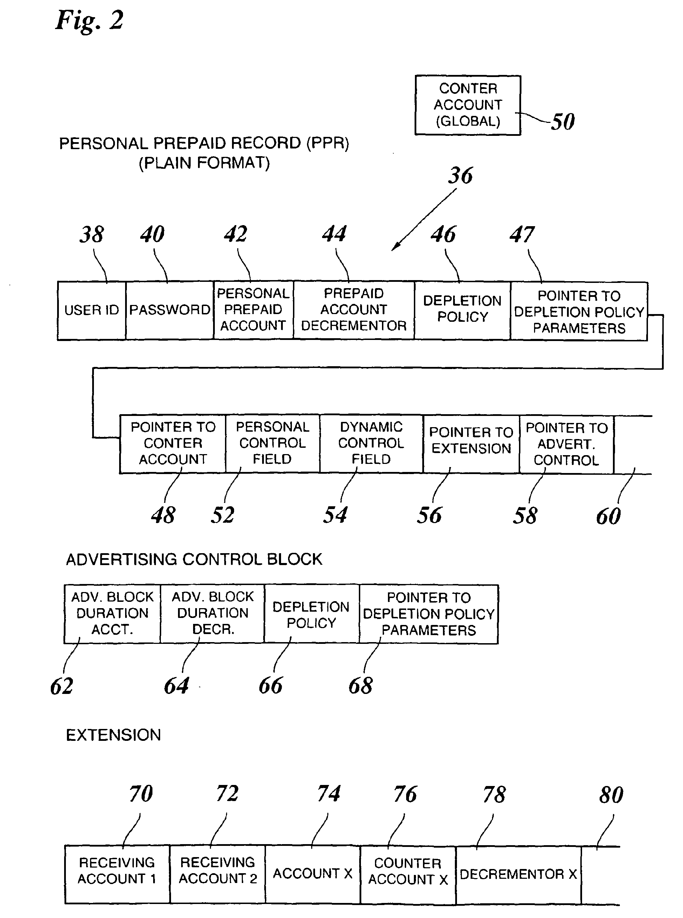

In the Personal User Database 12, each user has a Personal Prepaid Record (PPR) 36 the structure of which is shown in Fig. 2.

The PPR 36 contains various fields such as the following very essential fields: User-ID 38, Password 40, Personal Prepaid Account (PPA) 42. Prepaid Account Decrementor (PAD) 44, a Depletion Policy field 46, a Pointer to Depletion Policy Parameters 47, and a Pointer to Counter Account 48.

The User-ID identifies the user, the Password is used to authenticate the user, the Personal Prepaid Account contains the current value in accounting units of the Prepaid Account - basically representing a value to the user that he has acquired by prepaying or by other means. The Prepaid Account Decrementor represents the currently applicable tariff, as it describes the number of accounting units spent per accounting interval (comparable to a spending speed). The amount by which the Personal Prepaid Account is decremented is transferred to a counter account 50 which is not necessarily included in PPR. There may be a large variety of accounts which serve as counter account for a specific transfer action, depending on the actual service profile or on the type of transaction. This is why the PPR includes the field Pointer to Counter Account which specifies the applicable counter account. Depending on the privacy mode selected, the counter account may be a personal account included in the PPR of the same user or a global account owned by the Internet Service Provider or another participant, e. g. an advertiser, a sponsor or the like. In case of P2P transactions, the counter account may also be a Personal Prepaid Account or another account of another user.

The Depletion Policy field 46 and the Pointer to Depletion Policy Parameters 47 specify which action has to be taken when the Personal Prepaid Account becomes depleted.

The PPR further includes a Personal Control Field 52 and a Dynamic Control Field 54 the functions of which will be explained later.

Depending on the operating mode or service profile selected, the PPR may be in plain format or in extended format. The plain format includes the fields described above as well a Pointer to Extension 56. a Pointer to Advertising Control 58, and other fields 60 that may be used for other purposes.

Further, the plain format includes several advertising control blocks one of which is shown in Fig. 2. An Advertising Block Duration Account 62 is decremented by an amount specified in an Advertising Block Duration Decrementor 64 at the start of each accounting interval in which the user was restricted to watching a specific advertising block that is linked to the account field 62 and to a corresponding global counter account of the advertiser. A Depletion Policy field 66 specifies the action to be taken when the Advertising Block Duration Account becomes depleted, e. g. return to the default profile of the user. Additional fields 68 will control the duration of each individual advertising spot within the advertising block in an analogous manner.

The depletion policy specified in the field 46 or 66 may imply that access of the user is restricted to certain IP addresses. In this case the service profile to be employed is not necessarily fully pre-defined in the NSS. Instead, the PPR includes the fields "Pointer to Depletion Policy Parameter" 47, 68 which are associated with the Depletion Policy field and point to parameters such as an IP address which the SMA must hand-over to the NSS when instructing the NSS with a new policy. This method can also be used for exclusive premium content.

The plain format is sufficient when the user is using a privacy mode that does not need accountability and when the advertising mode does not need to track which advertising the user viewed. It is expected that the vast majority of users will mostly be using modes that are associated with the plain format (it is expected that services associated with the plain format are cheaper than services with extended format).

The Pointer to Extension 56 points to an extension which represents the extended format and, in the example shown, includes fields 70 to 80.

When the user 18 accesses the service, he will logically connect to the Network Service Switch 20 (NSS). The NSS constitutes the _{"}subscriber edge" where the subscriber (customer) communication is anchored, regardless which access method the customer uses. The NSS 20 will via the RADIUS protocol communicate with the RADIUS server 16 to authenticate the user. The RADIUS server 16 looks up the user record (the PPR - Personal Prepaid Record) in the Personal User Database 12, and if it finds the user and if the password or another authentication method employed matches, the RADIUS server will send a positive authentication to the NSS 20. The RADIUS server will modify the PPR in the database to indicate that it is currently an active user and will add the user-ID to a change-request list in the database 12. The SMA 14 will interrupt regularly (e. g. after manipulating a number of user account in it's local cache) to look up in the database, if a change has been requested. It will retrieve the PPR and store a copy of the PPR into it's local cache. The cache holds all active users. The copy of the PPR stays in the faster memory (the cache) until the user disconnects. When the user disconnects, the RADIUS server 16 is informed of that fact via a RADIUS accounting stop message and will indicate in the PPR that the user is no longer active and will inform the SMA 14, again via the database, to remove the PPR of that user from the active user cache.

The Network Service Switch 20 (NSS), which is controlled by the MPL 10, allows to change the user profile (effectively re-authorizing the same user) multiple times during a session. This effectively splits a user session into multiple part-sessions with a re-authorization of the same user taking place at the start of each part session - applying a separate user profile and a separate tariff and potentially also accounting mode to each part session.

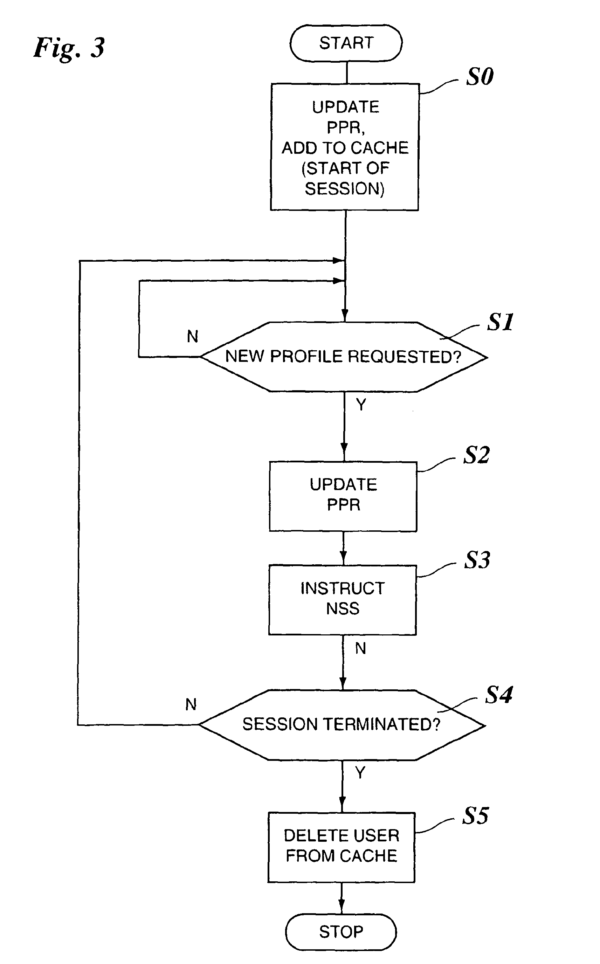

The basic steps of the method of providing Internet access and, especially, of changing the service profile, are illustrated in Fig. 3, which gives a high-level view of the functions performed by the MPL 10 as a whole. A session starts when the NSS signals, e. g. via a RADIUS Accounting Start Request, that service delivery using the initial authorization has in fact started. In step S0, the RADIUS Server 16 will update the PPR to mark it as active user and will also request the SMA via the database to add the PPR to it's local cache. In step S1, it is checked whether there is a request to change the service profile. This request may be entered by the user or may be the result of an event that is detected in the accounting procedure such as the event that the prepaid account of the user is depleted. The step S1 is repeated cyclically, until a request for a new service profile occurs. Then, the personal prepaid record PPR is updated in step S2, and the Network Service Switch 20 is instructed in step S3 to reconfigure the service profile for the user. Then, it is checked in step S4 whether the session is terminated. If this is not the case, the routine loops back to step S1, and the sequence of steps described above is repeated until the user logs off or is forcibly disconnected from the network. When it has been detected in step S4 that the session is terminated, e. g. on receipt of a RADIUS Accounting Stop message by the RADIUS Server 16, the PPR of the user is deleted from the cache, and the user will no longer be treated as an active user.

The SMA 14 is an application which is started automatically by the system in certain intervals (called accounting step) and manipulates the data records in the Personal User Database (PUD) 12 in every accounting step by transferring accounting units from one account to one or multiple other accounts, whereby strictly ensuring that the sum of all accounting units in the overall MPS does not change within an accounting step. An MPS-unit can be money in any currency or scaled money such a 1 / 10 Cent. Alternatively, an MPS-unit can also be time in seconds or minutes or any other time unit. Alternatively, an MPS unit can be bonus points of a customer loyalty system similar to the "airmiles" rewarding system used by air carriers, or other rewards provided by companies to their customers as a customer binding incentive. Alternatively, accounting units can be newly created units that do not yet exist today, such as "prepaid miles" where a prepaid mile has a fixed price at a certain time (the purchase time), which may however vary over time, or sponsor "miles" or advertising "miles" representing a special unit for accounting with advertisers and sponsors. Alternatively, an MPS unit can also be privacy-miles which allow to access the Internet with differentiated privacy levels and change the privacy level multiple times within a user session, whereby the user selects the appropriate privacy level for the respective Internet activity.

In general, there is a conflict between the desire of the user for privacy - and the desire of the user for accountability. Accountability allows the user to make his service provider accountable for the service provided, e.g. via refusing to pay for an item in a bill that the user claims to have not purchased or perhaps only received with degraded quality. Accountability means for the service provider that he needs the ability to rollback or compensate for e-commerce transactions where the user is not satisfied with the service provided or goods delivered. The user may demand the transaction to be rolled back (e.g. return the good based on laws for consumer protection) and therefore the service provider has to keep data on the user behavior in order to be able to rollback the e-commerce transaction or at least verify if the user complaint is substantiated. As a result the service provider would have to collect data on the user behavior such as his e-commerce transactions, content consumed, etc. Collection of this data is however in conflict with the user's desire for privacy. The MPS solves this problem by providing the user the choice at all times which privacy level he wants to be applied for the current Internet activity. If he wants to enforce privacy in that way that the service provider shall not track the user behavior for the next part session, he at the same time has to agree to give away his right to complain if the quality of the service was not satisfactory.

Six privacy levels are implemented in the MPS :
- Basic Accountability (e.g.: Service Provider tracks the flow of accounting units for rollback capability)
- Advanced Accountability (e.g. in addition: Service Provider performs IP billing on packets on a volume basis) This is achieved by the SMA 14 dynamically changing the decrementor field prior to decrementation on the basis of the number of packets counted by the NSS 20 in up to 64 buckets according to the value of the TOS field in the IP-packet.
- Premium Accountability (e.g. Service Provider acts as mediator for e-commerce transactions)
- Basic Privacy (e.g.: Service Provider does not know to which account accounting units have been transferred - no tracking, no rollback capability, no technical way to tell which content or which advertising the user viewed)
- Advanced Privacy (like basic privacy but plus e.g. basic anonymity for e-mail, cooky filtering)
- Premium Privacy (e.g.: advanced anonymity of the user is being granted by alias interfaces)

Related to the privacy mode are advertising modes. Advertising modes may or may not be user-selectable (alternatively they may be hard linked with a certain service). There are several advertising modes (combinations are possible if they are not contradictory), for example:
- No advertising (premium rate)
- Anonymous advertising
- Advertising at session start
- Advertising at session end
- Advertising at policy change
- Advertising at time interval
- Advertising in cooperation with Client
- Advertising Client triggered
- Advertising embedded in Client
- Full Screen interstitial advertising
- Exclusive Advertising (barring all other uses)
- Non-exclusive Advertising (user can do other activities in parallel)
- Targeted advertising
- Target Plus: Targeted advertising with tracking which advertising the user viewed
- Event and context driven advertising

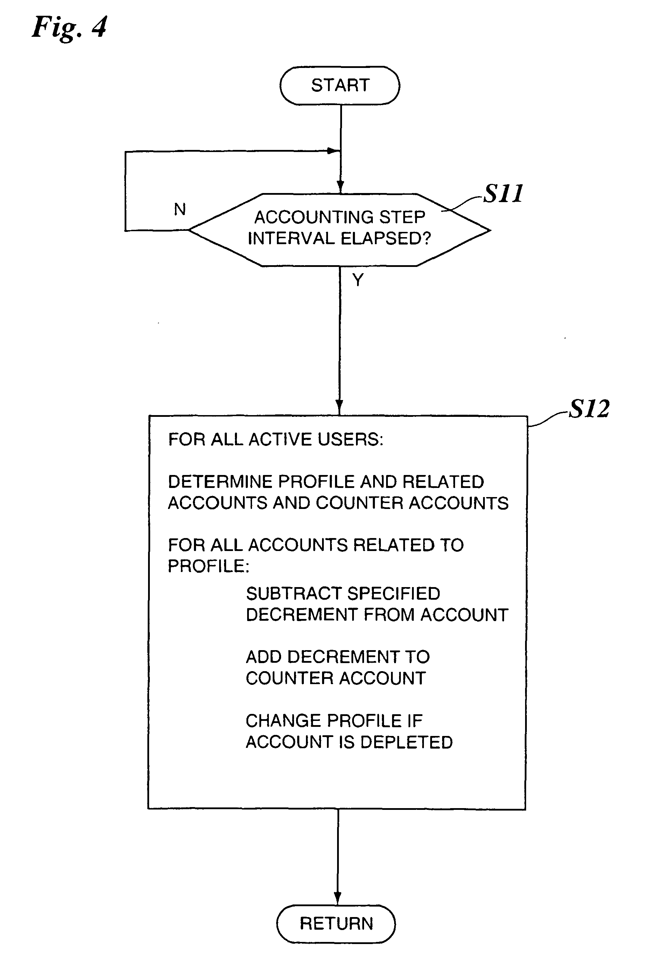

Fig. 4 summarizes the basic steps of the accounting procedure. In step S11, it is checked whether the accounting step interval has elapsed. This step is repeated, until the interval has actually elapsed. Then, the accounting for all active users is done in step S12. To this end, the current service profile of the user is determined, and it is decided which accounts may or must be changed pursuant to this service profile and which counter accounts are linked to these accounts. Then, each account that has been determined in this way is changed by subtracting the decrement that has been specified for this account. For example, if the account is the Personal Prepaid Account 42 shown in Fig. 2, then the corresponding decrement is indicated by the Prepaid Account Decrementor 44. The same decrement is then added to the counter account 48 associated with the present account. In an accountability mode, the counter account for the Personal Prepaid Account may be a personal receiving account included in the extension fields 70, 72 of the PPR. Similarly, the accounting step may include the transfer of a number of accounting units specified in the field 78 ("Decrementor X") from the field 74 ("Account X") to the field 76 ("Counter Account X"). Likewise, accounting units subtracted as decrement from the Advertising Block Duration Account may be added to the corresponding counter account which enables the advertiser to monitor in real-time how much time the users have collectively spent on watching this advertising block.

In step S12, it is also checked for each active user and for each account whether the account has become depleted. If this is the case, the SMA will instruct the NSS to select the service policy defined by the value in the field Depletion Policy and optionally by additional parameters defined by a list of chained parameters anchored by the Pointer to Depletion Policy Parameter. Subsequent to step S12. the routine returns to the start position and will be re-executed when the next accounting step interval has elapsed .

An essential feature of the MPL is the fact that it works according to the principles of accounting where the sum of all accounts remains constant in an accounting step. It is of course possible to fill or otherwise manipulate accounts via an external interface - however the SMA 14 will not change one account without transferring the balance to another account in the system, thus keeping the balance of all accounts in the database constant. This implies that there is a global account "Service Provider Earned Net Revenue" (represented by the Counter Account 48 in Fig. 2), which may be split further into subaccounts. In this account the Service Provider can check how much of the accounting units (e.g. prepaid money) has actually been spent by the users, reduced by the amount that other parties (e.g. content providers) have received in their global accounts.

In the accountability mode and in Target Plus advertising mode the SMA 14 transfers accounting units only within the PPR. Therefore, the PPR in extended mode contains receiving accounts (such as in fields 70, 72) where the prepaid accounting units will be transferred to in each accounting step, and also donating accounts such as sponsor accounts where (negative) MPS units get added (thus subtracted) when a sponsoring takes place or an advertising is viewed that is sponsored. This can be used to implement a personal maximum sponsoring threshold on a per customer basis and also on a per sponsor basis and also to limit the maximum time a single user can view a certain advertising (and get accounting units for it). It can also be used to target advertising taking into consideration which advertising the individual user has previously seen.

If not using the extended mode it is normal that the SMA transfers accounting units between a PPR and one or multiple global accounts during an accounting step. In this case, it is not possible to track for each individual sponsor or advertiser - which user has been transferred the accounting units (who did benefit from sponsoring, and who did see a particular advertising or a particular exclusive content). This can be used to ensure privacy protection. The MPL and each PPR can be run in mixed mode where some accounts are treated in fully personalized mode whereas other accounts are treated in global mode. In the variant "Global-Mode" the sum of all so-called global accounts and of all active PPRs is always balanced (zero) after each completed accounting step. For time rated service profiles, accounting steps are executed by the Session Manager Application 14 (SMA) regularly in certain intervals called Accounting Step Interval. Each PPR may optionally contain a field "Accounting Step Interval" containing a value that defines the applicable accounting step interval as a multiple of a system-wide variable called "Smallest Accounting Step Interval". This variable is configurable as a constant value determining a time interval with system wide significance. If the smallest accounting step interval is one second, then a value of 60 in the "Accounting Step Interval" field of the PPR means that accounting for this customer is done on a per minute basis. Each PPR contains at least the Personal Prepaid Account 42 as well as the Prepaid Account Decrementor 44, in which the current speed (rate) of spending accounting units is kept. For simplicity, if the "Accounting Step Interval" field is not present in the PPR, then a default value of one second applies. In addition, the database contains an account "Service Provider Revenues", to which the accounting units are transferred when they are decremented in the individual personal prepaid accounts - alternatively multiple accounts may be used to split the revenue across multiple accounts according to the cost structure of the service provider or according to other criteria that can be flexibly configured by the service provider.

The PPR contains the two control fields mentioned above, i.e. the Personal Control Field 52 and the Dynamic Control Field 54. These control fields (including optional extensions) determine how the SMA 14 handles the PPR 36 in each accounting step. The Personal Control Field is static and cannot be changed by the SMA, the Dynamic Control Field is dynamic and can be changed by the SMA. The Personal Control Field contains preconfigured controls, whereas the Dynamic Control Field controls the dynamic behavior within a user session.

### Personal Control Field:

Bit 1: If set to 0 it operates in global prepaid mode, if set to 0 it operates in personal prepaid mode. In personal mode, the SMA is only allowed to transfer accounting units from the prepaid account in the PPR to one or more other accounts in the same PPR within an accounting step.

Bit 2: If set to 0 it means simple accounts (all accounts are in the same MPS-unit, no account restrictions apply. If set to 1, there is an additional database field for each account that is called account control field. It may be a separate field or it may be a number of bits from the decrementor field reducing the value range of the decrementor field. If present, the account control field determines in which accounting units the account be run. When operating in mixed MPS-unit mode, the SMA uses a conversion table to convert from one MPS-unit into another in each accounting step where necessary. This conversion table (including the applicable conversion rates) may be dynamic and may be changed via an external B2B interface (one of the interfaces 34 in Fig. 1). The account control field may also determine limitations to the account, e.g. whether an account and an associated decrementor field can never be decreased or whether it can never increased e.g. by an external interface.

Bit 3: If set to 0: Advanced mode (to each account there is a variable decrementor field). If set to 1: Simplistic mode, i.e. decrementor fields are not present, all decrementors are 1 unit and cannot be changed, i.e. in each accounting step the SMA subtracts the value of 1 from the respective accounts.

### Bit 4: reserved

Bit 5: If set to O. a session starts with the default mode, if set to 1, the session starts with a special start-period (website 28).

Bit 6: If set to O, a "period of grace" does not apply, if set to 1 a period of grace applies after the prepaid account has been depleted.

Bit 7: If set to O, global advertising mode applies, if set to 1, personal advertising mode applies.

Bit 8: If set to 0: The decrementor field is not volume based, only time based. If set to 1: A Prepaid Volume Based Decrementor applies, which means that the SMA has to reset the Prepaid Volume Based Decrementor (PVD) to 0 at the end of the accounting step and transfer the volume units to a total volume account. This assumes that the network element sends volume units less frequently then the accounting steps are occurring. A volume based interface enables the NSS 20 to measure traffic volume parameters and set the Prepaid Volume Based Decrementor accordingly. The PVD is zero when no traffic volumes are measured, (thus a subtraction of zero does not change the prepaid account). After the PVD has been subtracted from the prepaid account, the PVD is set to zero, in which way it is ensured that a used volume is only accounted for once.

Bit 9: If set to O, the system operates in global sponsor mode, if set to 1 it operates in personal sponsor mode.

Bit 10: If set to 0 the system operates in global content mode, if set to 1 it operates in personal content mode.

Bit 11: If set to O, shared advertising does not apply to this user, if set to 1 it applies.

Bit 12: If set to O, exclusive advertising does not apply to this user, if set to 1 it does apply.

Bit 13 Reserved

Bit 14 Reserved

Bit 15 Reserved

Bit 16 If set to O, an extension Personal Control Field is not present, if set to 1 such a field is present.

### Dynamic Control Field:

Bit 1: Mode change indication

Bit 2: reserved

Bit 3: If set to O. the PPR is currently in default mode, if set to 1, it is in non-default mode

Bit 4: If set to 0 the PPR is currently in non-advertising mode (i.e. the user is currently not interrupted by an advertising break), if set to 1 the PPR is in advertising mode, i.e. the user is being interrupted by an advertising break

Bit 5: If set to 0 the user is currently not in a start mode, if set to 1, he is in the start mode.

Bit 6: If set to O. the user is currently not in a "period of grace", if set to 1 the user is currently in the period of grace (he sees only website 32).

Bit 7: If set to 0 the user is currently not in advertising mode, if set to 1 he is in advertising mode.

Bit 8. Reserved

Bit 9: If set to 0 it operates in global sponsor mode, if set to 1 it operates in personal sponsor mode.

Bit 10: If set to 0 it operates in global content mode, if set to 1 it operates in personal content mode.

Bit 11: If set to O, the PPR is currently not in a Premium Mode (e.g. accessing premium content), if set to 1, it is currently in premium mode and therefore an account that limits the maximum premium time has to be decremented.

Bit 12: If set to O, the PPR is currently not in a sponsor mode, if set to 1 it is currently in sponsor mode. This can be used to limit the duration of a sponsor mode part-session.

Bit 13: Reserved

Bit 14: Reserved

Bit 15: Reserved

Bit 16: If set to O, an extension Dynamic Control Field is not present, if set to 1 an extension Dynamic Control Field is present.

All accounts of a PPR including the respective decrementor fields can be chosen to be in one of the following accounting units: local currency of the user, another currency, bonus points of a customer loyalty program, bonus points that can be purchased or otherwise acquired e.g. via e-commerce activities or by viewing advertising, existing loyalty program units such as airmiles, rewards, etc., new bonus programs, advertising "miles" that specify a unit for flexible accounting with advertisers (broadcasting an advertising spot in a prime time may cost more advertising miles per second than during another time of the day, customer invisible units such as profitability miles that are hidden to the customer but have influence to the quality of service that the customer receives within the boundaries of his contract, invisible accounting miles that are used to produce a bill for customers that are not prepaid, but postpaid, micropayment units from any micropayment system on the market or new micropayment system units, vague value miles, where the exact value of the mile may differ on the time of day or other criteria not transparent to the user or owner of the mile. In the case when the MPL works with multiple accounting units in parallel or in mixed mode between prepaid-Miles and currencies, each account will also have a field indicating the currency applicable for this account. The system may also contain a systemwide configurable conversion table to convert between different forms of accounting units. This conversion table can be manipulated via additional parameters and interfaces to other systems such as by the B2B interface 34 to allow that the table calculation may be non-linear and the conversion result may differ depending on time of day, or other factors such as a real-time course determined at a B2B-exchange for accounting units at a market comparable to the stock market NASDAQ but which is trading 24 hours around the clock.

At each accounting step the MPL subtracts from all PPRs of active users the actual value of all prepaid decrementor fields from their associated prepaid accounts and transfers the same value to another account in the system (in personal mode this account is also part of the same PPR, in the global variant this account may alternatively be a systemwide account).

In addition to the customer prepaid account there may be additional accounts in the PPR and system wide in the MPS, which work according to the same principle as the customer prepaid account. This means they have an associated decrementor field - so-called unrestricted decrementor fields, where the decrement value is allowed to become a negative value, which leads to an increase in the associated account during the subtraction done in the accounting step (and an associated decrease in the counter-account which could be a sponsor account). Some accounts may be classified as restricted accounts. In this case the MPL ensures automatically that the account value can only change in one direction i.e. either always increases during an accounting step (or remains at the same value) or decreases during an accounting step (or remains at the same value). A sponsor account is usually an account which will only decrease during an accounting step (while it leads to an increase in the accounts that benefit from the sponsor).

The PPR may also contain accounts that are used for the control of advertising breaks. The user normally has a default profile which is applied at the beginning of the session. The default profile may be preceded by a profile that forces the user to a certain homepage at the start. This could be the "Content and Policy Selection Portal" 30, or it could be the Start Period Website 28 directing the user to the website of a sponsor or to an initial advertising spot. After the optional start period (which is controlled by a start period account with associated decrement) the user is assigned into his default profile. If the user service includes interruption by advertising breaks, then there is an account present that controls the time till the part-session with the default profile ends and is followed by an advertising break. This account is called Default Profile Account and together with it's associated decrementor field it is used to control the time between advertising breaks during which the user is assigned his default profile. The default profile could for example allow him to surf freely in the Internet. Alternatively, the default profile may limit the user to a very basic service such as access only to websites via http. In this case, unrestricted Internet access may be offered as a premium service. The service provider is free to define the default profile according to the market requirements. When the Default Profile Account is depleted, the Session Manager Application 14 changes the profile of the user to the profile of the first advertising spot in the advertising block and transfers the PPR into advertising mode. The switchover to the advertising mode is performed automatically by the Session Manager Application. The duration of the advertising block is determined by the account "Advertising Block Duration" and it's associated decrementor field. The duration of the advertising block may thus be measured in either time (default: seconds), or accounting units including specially created advertising miles. The counter account in the personal variant is a PPR account in which the amount of consumed advertising per customer is measured in either time or accounting units (e.g. advertising miles). The counter account in the global variant is an equivalent global account for all active customers or all customers in the system.

Within the advertising block it is possible to schedule different advertising spots in a certain sequence, where the duration of the current advertising spot is controlled by an "Advertising Spot Account" and it's associated decrementor, if the default of one second decrement and 1 second accounting step during advertising breaks is not used. The decrement may be in time or accounting units. Advertising miles are an option for the accounting unit, which can be used for factoring and accounting with the advertising companies. The sequence of the advertising spot is determined by a pointer in the PPR that refers to the next advertising spot. The advertising spots are organized in a data structure that can be referred to as chain or (optionally also as ring) and the sequence in the chain or ring determines the sequence of the advertising spot. There may be a global chain or ring with the PPR pointing to one specific advertising spot at each time that is the next advertising spot to be shown to the user. There may alternatively be a personal advertising data structure per PPR (per user) which determines the sequence of advertising spots showed to a specific user and can be used for targeted advertising including the option to change the sequence of advertising dynamically depending on events.

The MPS system owner can configure the sequence of advertising spots on a per customer basis in a flexible and dynamic way, he can also change the sequence during an advertising spot depending on certain events.

During advertising breaks, normal accounts will not be changed - instead accounting steps apply only to advertising accounts. If the default for advertising steps applies, then one advertising step is executed per second and only the advertising accounts are decremented. If the default does not apply, then the following more general method applies: In each advertising step the value of the associated decrementor field is subtracted from the advertising accounts and transferred (added) to a counter account (in personal mode an advertising account is part of the PPR, in global mode it is a system wide account which summarizes the sum of all advertising consumed as well as the sum seconds/decrements of each advertising spot consumed). This way it is possible in personal mode to view how much of which advertising spots each user in personal mode has viewed, in global mode, it is only possible to determine how much advertising was consumed and of which advertising spots, but not by which users.

The advertisers can access the system at any time over the Internet or another interface and view the current value of the global advertising account. This way they can study exactly the rate at which the advertising campaign is being viewed by the users. They can correlate this information with parallel activities such as feedback collection via telephone polls, real-time statistics on e-business activities, sales revenues etc. to better fine-tune the campaign. As an additional option the system owner can offer to provide anonymised data on the customers that viewed the advertising spot and/or target the advertising on a regional basis or other anonymised criteria to allow an even better fine-tuning of the advertising campaign - in a sense extending the concept of a regional testmarket to the Internet with additional criteria that are not regional, but targeted to certain customer groups as testmarket.

The Session Manager Application 14 runs regularly (once per accounting step) and executes on all PPRs of active users. The operation of the Session Manager Application on an individual PPR is controlled by the Personal Control Field and the Dynamic Control Field. Active users are users that have started a session and not yet terminated it. Session start and session termination is done by the RADIUS server on the same database. While the session is active, the Session Manager Application at each accounting step decrements the applicable accounts (in default mode the prepaid account and the default profile account, in advertising mode the advertising-related accounts, in premium mode the Maximum Premium Time account and the Prepaid Account. In sponsor mode (which may coexist with the other modes) it also decrements the sponsor accounts (global or personal) and transfers the sponsor accounting units to the beneficiary.

The "Content and Policy Selection Portal" 30 (PSP) is a user interface over which the user can change values in the personal user database - effectively changing the user profile (and implicitly the service) during the usage session leading to the immediate or delayed start of a new part session with a new tariff and potentially a new accounting mode. This allows the user to change the accounting mode within a session, e.g. from accounting on a per minute basis to accounting on a per second basis. The user can recharge his prepaid account using the PSP. The prepaid account can be charged and recharged by the user over all common payment methods (cash, bank debit, credit card, mobile card, telephone bill, etc.). Over the PSP the user can control to change his user profile with immediate effect, a fixed delay or bound to a certain event - including a quasi simultaneous tariff change. Via the PSP, the user can select the usage profile of the next part-session. Examples for usage profiles are the following:

Standard: unrestricted usage, Best Effort Service, no hacker-protection, no access to protected intranet areas without separate authorization, no advertising breaks that block other activities (basically corresponds to the most commonly used profiles today).

Bronze: like Standard, but with tolerated advertising breaks in certain intervals which block other activities during the advertising break.

Silver: like Bronze, but with improved QoS (Quality of Service) e.g. with higher bandwidth to the backbone and in the backbone for this user by giving the traffic of this user priority treatment relative to bronze service users and standard service users, or by giving absolute bandwidth guarantees.

Gold: like Silver, but without interruption by advertising breaks.

Children: like Bronze, but with content filtering for unwanted content and only with advertising suitable to children.

Secure Gold: like Gold, but with special network based firewall that protects against certain popular hacker methods (e.g. with anti-spoofing protection).

IP-VPN/Intranet: unrestricted usage, potentially with Premium QoS via guaranteed bandwidth or DiffServ priorisation when accessing a corporate network, automatic membership without separate authorization.

Advertising Block: for the duration of the advertising block the usage is restricted to the consumption of advertising in a sequence of advertising spots, which can be dynamically changed (add: Voluntary advertising viewing)

Advertising spot company X: restricted usage (only certain IP addresses or web-servers hosting the advertising or a subset of these. Potentially in addition access to linked webpages of advertised products for direct e-business activities.

Sponsored Site of company Y: restricted usage limited to certain content or web-servers, e.g. free access for banking transactions with Bank Y which does not decrement the prepaid account as long as the user is accessing only sponsored content. As soon as the user is leaving the sponsored sector, i.e. starts an activity not covered under the sponsored user profile, he is being warned that he is leaving the sponsored sector and that the default tariff will apply in the non-sponsored sector from now on. Return to the sponsored sector is possible via selection in the PSP.

Sponsored by Company Z: limited usage, access only to company Z and to content that company Z is willing to sponsor. The prepaid-decrement is negative, as the company Z actually pays the user for accessing it's content. Company Z pays accordingly to the owner of the MPS.

Prepaid-account depleted: there are two variants how the depletion of a prepaid account can be handled:

1: The user will be disconnected immediately from the service and - where applicable (e.g. in dial-in scenarios) from the network as well.

2: If the system owner has configured it in that way, the user can be given a last period of grace during which he is being warned of imminent disconnection and be given a last chance to recharge his prepaid account. His user profile will be limited to viewing the warning of imminent disconnection and of recharging his prepaid account (website 32). If the last period of grace goes by without the account being recharged, the user will be disconnected from the service and where applicable also from the network.

Premium Content Gold allowed: usage allowed to all content including content classified as Gold, Silver and Bronze. Possible to access multiple contents of multiple classes in parallel.

Premium Content Silver allowed: usage allowed to all content including content classified as Silver and Bronze. Possible to access multiple contents of multiple classes in parallel.

Premium Content Bronze allowed: usage allowed to all content including content classified as Bronze. Possible to access multiple contents of multiple classes in parallel.

Premium Content exclusive: usage limited to access Premium Websites of a certain content provider or a very specific content only, such as a baseball game, but no other content in parallel. The content provider may decide to allow access to related websites such as e-commerce sites related to the premium content (e.g.. DVD purchase of a film after viewing a streaming media preview). If the user initiates other activities he will be warned that he is trying to leave the exclusive premium content area and that he shall confirm he wants to return to the default service profile (or continue with premium content).

At the beginning of a usage session the user is authorized with a certain profile, which is called his default profile. The user may be able to change his default profile. The user will return to his default profile if he specifies a maximum time he likes to spent in a premium rate profile. The user can select a new profile from a range of preconfigured profiles with the PSP 30 and start a new part-session anytime during the session. User profiles are preconfigured in the NSS 20, so the communications between the PSP and the NSS only needs to communicate the selected profile in most cases except if a user policy requires additional parameters to be handed-over at instruction time.

In conjunction with sponsoring, each user may have a Sponsoring Receiver Account that can be accessed by the external B2B interface 34. This account can be increased by third parties (so-called _{"}Simple Sponsors" such as advertisers in return for a "Page Impression" or a visit to a website of the advertiser. Alternatively, the sponsor may have the ability to increase the prepaid account directly.

Further, there may be provided a sponsoring interface with ability to change the user profile. This interface has access to the Prepaid Decrementor field 44 in that way that the sponsor can decrease the value of the decrementor field (which is time dependent) and also potentially of a volume dependent decrementor field. If the decrementor becomes zero, this effectively represents a full sponsoring of the service, effectively a "free" service paid by the sponsor. It is also possible to do a part sponsoring. If the value of the decrementor becomes negative, then the sponsor even goes further and pays accounting units into the pockets of the user (into his prepaid account at each accounting step, as the subtraction of a negative value increases the prepaid account). The sponsoring interface is allowed to change the user profile in return for the sponsoring during the sponsored part-session. As an example the sponsoring interface may force the user be able to access only certain websites or use certain services while other websites or services are blocked for the duration of the sponsored part-session. This feature allows to implement an effective advertising financing method with the implementation of advertising breaks which resemble the business model of the free-TV.

If the user is trying to leave a sponsored sector, i.e. if he is violating the policy set on behalf of the sponsor in exchange for sponsoring, he is directed to a Sponsor-Exit Website. Here, the user gets warned that he is leaving sponsored sector and gets a choice to continue in the sponsored sector or will be forwarded to the Policy Selection Portal 30.

Optionally, there may further be provided an e-Business Transactions Interface (B2B interface), which the user can use for payment at other websites such as auction sites or barter sites. The payment or barter or exchange or auction or donation transaction may be executed in any of the accounting units except time and unit value 1. This may be used for microtransactions (e.g. micropayment, microbarter, microauction, microexchange, microdonation). A sponsor could specify that 1 MPS-unit (e.g. one prepaid-mile) will be donated with every advertising spot viewed to a third party such as a non-government organization like Greenpeace. When viewing or otherwise consuming premium content, such as music, the viewer can have an option to donate directly to the artist who created the viewed or otherwise consumed intellectual property. This interface can also be used to influence the value of accounting units via dynamic conversion tables.

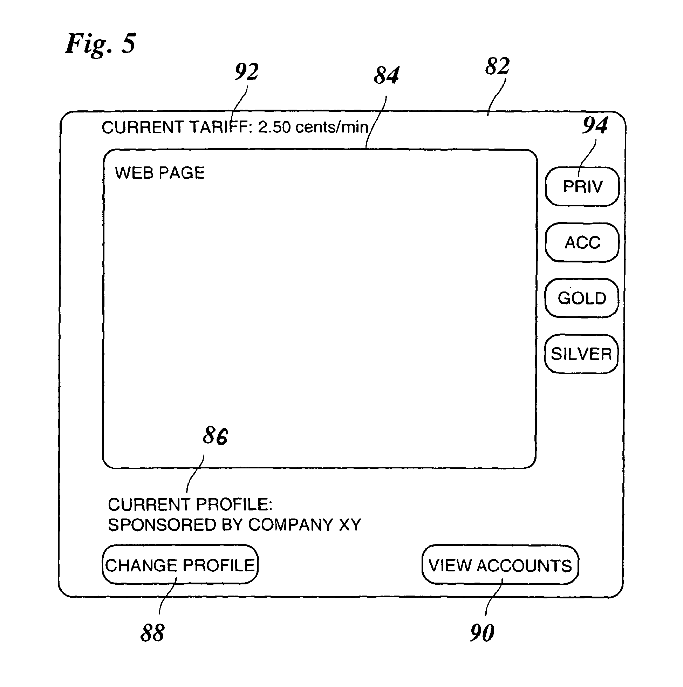

To give an impression, how the system described above may appear from the viewpoint of the user, Fig. 5 illustrates an example of a user screen 82. As usual, the main part of the screen is occupied by the web page 84, which the user is currently visiting. In the example shown, it is assumed that this web page 84 is a page that is sponsored by a company XY. Below the web page 84, a message 86 informs the user about the service profile he is currently using. In the present case, the message 86 says: "Sponsored by company XY". Thus, the user is informed that he watches the web page 84 at a reduced price or even cost-free. Optionally, the current tariff may be indicated as well.

A button 88 "Change Profile" can be clicked by the user if he wants to switch to another service profile. Then, the user will be directed to the Content and Policy Selection Portal 30 shown in Fig. 1.

Another button 90 "View Accounts" permits the user to check the current status of his prepaid account and any possible other accounts. The information made available in this way is updated essentially in real-time, i.e. after each accounting step interval.

A message 92 indicates the current tariff, and a number of buttons 94 provide short-cuts for quickly changing to other profiles such as "Privacy", "Accountability", "Gold" and "Silver".

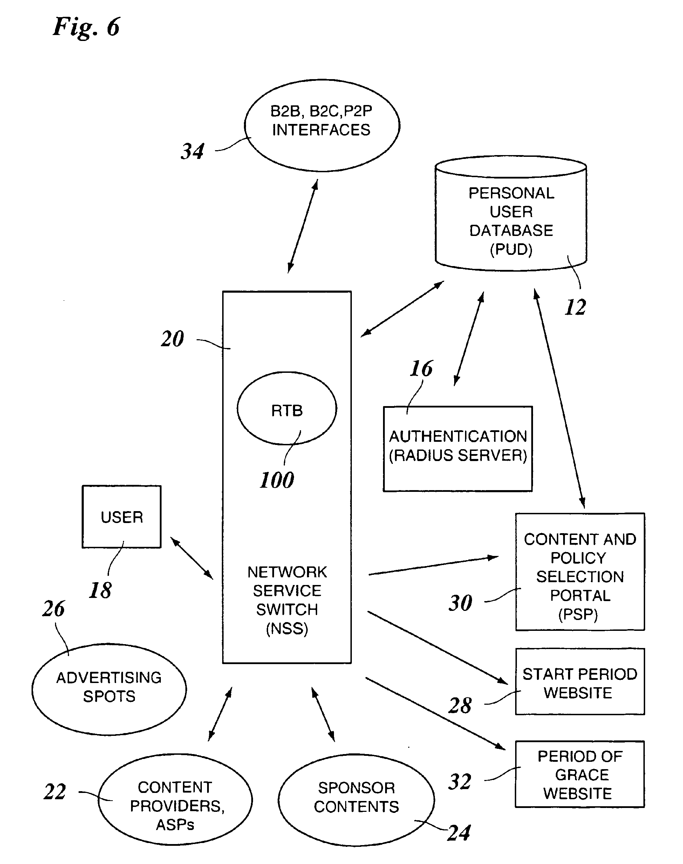

Figures 6 to 10 illustrate another embodiment of the invention. This embodiment is in the form of a real time billing system that is useable for both, prepaid and postpaid. As an outstanding feature, this embodiment is suitable for volume-based billing in real time, including billing for tariffs that comprise a mix of time rates and volume rates and for tariffs that comrise multiple differentiated rates for packets depending on the packet type. The packet type may be differentiated according to any information contained in the packet, including the direction of packet, type of subscriber (if encoded in a subscriber IP adress range), destination, layer 4 to 7 information such as protocol or port used, URL accessed, etc.

In the IP-world, there is an increasing demand for volume-based billing systems, because this kind of billing, in contrast to flat rates, is considered as an equitable and promising way to achieve a return on investment on higher value IP-services. However, an efficient realtime volume-based billing system could so far not be implemented for a number of practical reasons which, in summary, are caused by the extreme complexity of data traffic which, in conventional approaches, would lead to an unreasonable overhead for the billing system and to an undesirable fragmentation in the data flow and in the billing procedures.

The embodiment proposed here provides a solution to these problems and, in addition, is widely compatible with the large variety of existing standards. It is easy to implement in existing network architectures and nevertheless provides a high level of flexibility and scaleability.

The key concept of the approach proposed here is that accounting should be done at the very location where the data packets are relayed between the user and the network, because it is this location where the necessary information on the volume, the origin and the destination of the data packets is available. As a result, the accounting procedures may readily be performed without any need for additional data traffic or other overhead for gathering the required information.

Comparing Fig. 6 to Fig. 1, it can be seen that the Multifunctional Prepaid Logic (MPL) 10 of Fig. 1 has been replaced by a Real Time Billing system (RTB) 100 which, however, is now incorporated in the network service switch (NSS) 20. On the other hand, the personal user data base 12 and the Radius Server 16 for authentication purposes have been stripped-off from the RTB 100 and have been established as separate entities.

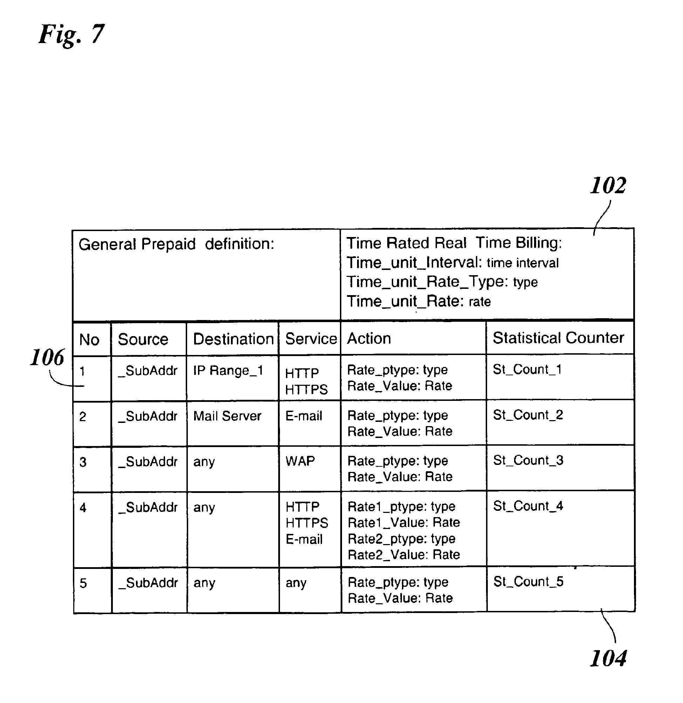

The real time billing system 100 shown in Fig. 6 may perform all the functions that have been discussed above in conjunction with the Multifunctional Prepaid Logic 10, including time-based accounting with accounting steps performed in regular accounting time intervals. In addition, however, the system shown in Fig. 6 is also adapted to perform volume-based billing dependent on the volume, type, origin and destination of data packets passing through the NSS 20 for being delivered to or from the user 18. The applicable charge rate may depend upon the type and destination or origin, and hence also on the flow direction, of the data packets, as is laid down in a so-called billing policy an example of which is shown in Fig. 7.

The billing policy is a data structure or program object having a header 102 and a body 104. For illustration purposes, it may be assumed that the billing policy shown in Fig. 7 is one for a prepaid system. The header 102 specifies the data required for the normal time-based billing, i.e. a variable "Time_unit_Interval" specifying the accounting time interval (e.g. one minute or one second), a variable "Time_unit_Rate_Type" specifying a payment type and a variable "Time_unit_Rate" specifying the rate to be charged for each time interval during which the service has been used. The variable "Time_unit_Rate" corresponds to the entry in the decrementor field 44 in the previous embodiment.

The variable "Time_unit_Rate_Type" specifying the payment type implements a new concept that will need further explanation. This variable points to a data structure or object which specifies the fundamental parameters of the payment and accounting process, including for example the billing mode (prepaid or postpaid), the credit source, i.e. the way how financial transactions between the subscriber and the service provider are to be handled, the credit currency being used, e.g. Euro, US-Dollar, time units, loyalty points and the like, the credit granularity, e.g. 0.00001 Euro in case of Euro currency, logical variables controlling whether or not negative or positive credits are allowed, and the like. The credit source may for example be given in the form of a personal account of the subscriber or in the form of an IP address or sub-address of an agency administrating the financial transactions, accompanied by an identification of the subscriber.

In the example described above in conjunction with Figs. 2 to 5, each subscriber had only a single personal account, i.e. the personal prepaid account 42, and a system-wide payment type was applicable to all users. The concept of variable payment types adds more flexibility to the system and permits to serve varying demands of the users, including the possibility that one user has several accounts differentiated by their payment type. It thus permits one and the same user to employ different payment types in parallel and to select the payment type dependent on the service being used.

The body 104 of the billing policy shown in Fig. 7 lists a number of payment rules 106 which are each represented by a single row. The payment rules 106 are used for volume-based accounting, by determining a rate or price for each data packet that is transmitted to or from the user 18 through the NSS 20. In the example shown, the individual data packets are differentiated by their source, destination and type of service (e.g. HTRP, E-mail, WAP and the like). When a packet flows through the NSS 20, the applicable payment rule is identified by selecting the first one of the rows for which the entries in the first three columns "Source". "Destination" and "Service" match the data packet. Then, the entries in the column "Action" identify the payment type and the rate that are applicable for this data packet. The column "Statistical Counter" identifies a counter associated with the payment rule for counting the data packets for statistical purposes. The contents of these statistical counters may or may not be made available to the user, depending on the selected privacy policy.

It will be understood that the concept of payment rules provides a high flexibility in assigning different rates (and even payment types) to the various data packets, depending on their origin, destination and service type. For example, data packets originating from different Contents Providers may be charged with different rates.

As is exemplified in the fourth line of the body 104 in Fig. 7, a single payment rule may even involve two different payment types and rates being assigned to one and the same data packet. This feature may be used for example in cases where the service is sponsored, so that a first rate is charged to a sponsor and only the remainder of the costs (second rate) is charged to user. As another example, the second rate may specify loyalty points that are credited to the user for having used that specific service.

While, in the previous embodiment, each user had only a single prepaid account 42, and the charge rate was uniquely defined by the contents of the prepaid account decrement 44 which was changed only in conjunction with the change of the service profile, the present embodiment not only permits the user to have different credit counters or prepaid accounts (one for each payment type), but it also permits to employ different rates for different items, even within one and the same service profile.

It will be understood that the payment policy such as that shown in Fig. 7 forms part of the service profile to be selected by the user, so that the applicable rates will also vary in accordance with the selected service profile.

Another important difference between the previously described embodiment and the present embodiment is that the accounting operation performed by the billing system 100 is not necessarily performed in regular time intervals but is event-controlled.

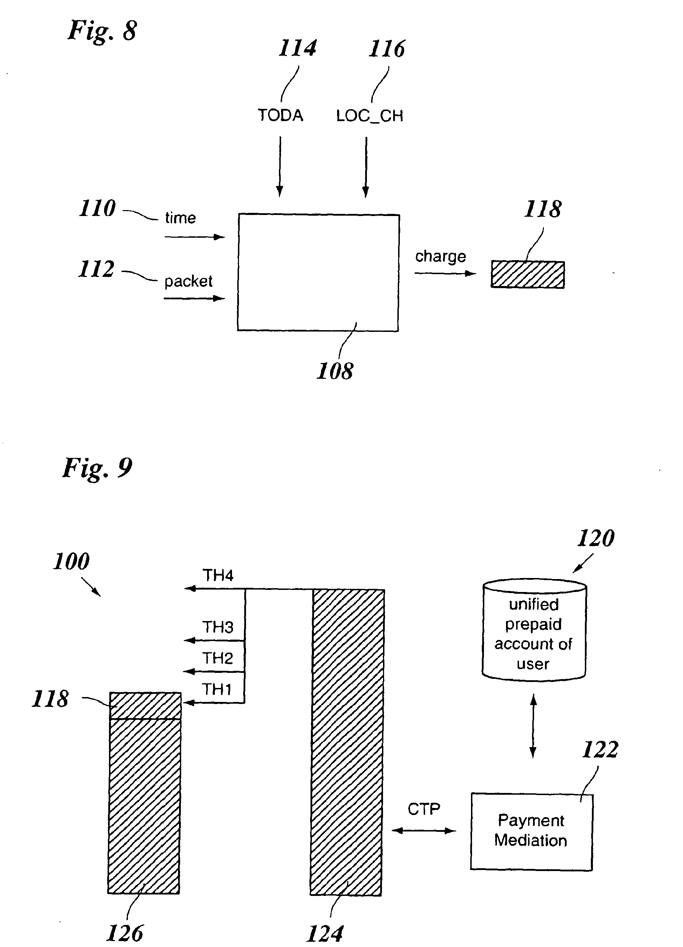

As is illustrated in Fig. 8, a first step 108 of the accounting operation may be triggered on the one hand by time events 110 and on the other hand by packet events 112. A time event is an event signaling the lapse of the accounting time interval that has been specified in the header 102 of the billing policy and will trigger the step 108 for determining the time unit rate that has also been specified in the header 102. On the other hand, a packet event 112 indicates the arrival of a data packet for which a rate has to be determined in accordance with the body 104 of the billing policy. In the most general case, the step 108 will thus be triggered regularly, each time after lapse of the accounting time interval, and, in addition, upon arrival of each data packet for which a rate has to be charged. It may of course be prescribed in the billing policy that certain packets, e.g. those belonging to a specific service type or those originating from a specific range of data sources or sent to a specific range of destinations are free of charge and are passed through the NSS 20 without triggering an accounting operation.

Strictly speaking, the rates specified in the billing policy should be considered as raw rates which may be modified depending on other circumstances, such as the time of the day (TODA; Time Of Day Accounting) or depending on the current location of the user 18, so that the price eventually charged for the service item (service time or packet) will depend also on these factors. To this end, the step 108 in Fig. 8 has two additional inputs 114, 116. The input "TODA" 114 represents the time of the day and may be used for example for increasing the raw rate by a certain factor in high traffic times or for reducing the raw-rate at night times. The input 116 "LOC_CH" indicates a change of the location of the user 18, e.g., in case of mobile access, if the user 18 roams into another country or enters a pre-defined home zone, where a reduced tariff applies. Thus, the raw-rate specified in response to the time event 110 or the packet event 112 may be multiplied by a first factor depending on the input 114 and by a second factor depending on the input 116. Alternatively, the inputs 114 and 116 may also be processed in the form of adding a constant value to the raw rate or by modifying the raw rate pursuant to any other function. Within this framework, it is even possible to charge a monthly basic rate by adding an amount corresponding to this basic rate to the price for the first service item when a new month has started. In any case, the result of the step 108 will be a certain amount of charge 118 (in the currency specified by the payment type), and the user will be charged with this amount for the service item that has triggered the accounting operation. The charge 118 might then be deducted from the personal prepaid account (the one associated with the specified payment type) as in the previous embodiment. However, in the example shown, a somewhat different accounting procedure has been adopted for security reasons, as will now be explained in conjunction with Fig. 9.

Since the accounting is done in the network service switch (NSS) 20 which will normally be remote from the personal user data base 12, there is a risk that the data on the whole accounting procedure get lost in case of a system breakdown. Since it is the service provider who has the burden of proof that the services have actually been rendered, such loss of data could cause considerable damage to the service provider. For this reason, it is advisable that at least intermediate results of the accounting procedure are regularly "saved" in a fail-safe memory, as is common practice already in billing systems for mobile telephone services. As is shown in Fig. 9, a so-called unified prepaid account 120 for each user is safely stored in a data base so as to be protected against loss of data. This data base communicates with the billing system 100 located at the NSS 20. In the example shown, this communication is mediated through a payment mediation instance 122 which may be formed for example by applicant's product "Nortel Prepaid Data Node" and which itself communicates with the billing system 100 via a CTP protocol.

After logon and authentication of the user, a certain amount of credit, which may for example correspond to a value of 2.00 Euro, is transferred ("leased") from the unified prepaid account 120 to an accumulated lease register 124 in the billing system 100. Then, the accounting done in the billing system 100 basically consists of checking whether the leased amount of credit that has been transferred into the register 124 still covers the accumulated charges for the service items. To this end, the charges 118 determined in the step 108 are added (accumulated) in a credit counter 126, and it is checked whether the credit counter 126 exceeds one of a plurality of thresholds TH1, TH2, TH3 and TH4. The absolute heights of the thresholds are linked to the contents of the accumulated lease register 124.

The credit counter 126 is an object that is defined by its payment type and by its thresholds. Each threshold is defined by a value (relative to the contents of the accumulated lease register 124), a "direction" and an "action" that has to be taken when the threshold value is crossed in the direction (upward or downward) specified by the parameter "direction". When a session starts, a suitable number of credit counters 126 are opened, corresponding to the number of payment types specified in the billing policy.

As is symbolized in Fig. 9. the addition of the charge 118 to the contents of the credit counter 126 has had the effect that the lowest threshold TH1 has been crossed in upward direction. The action specified for this event is to send a request to the unified prepaid account 120 to transfer another lease amount of credit (another 2.00 Euro) into the accumulated lease register 124.

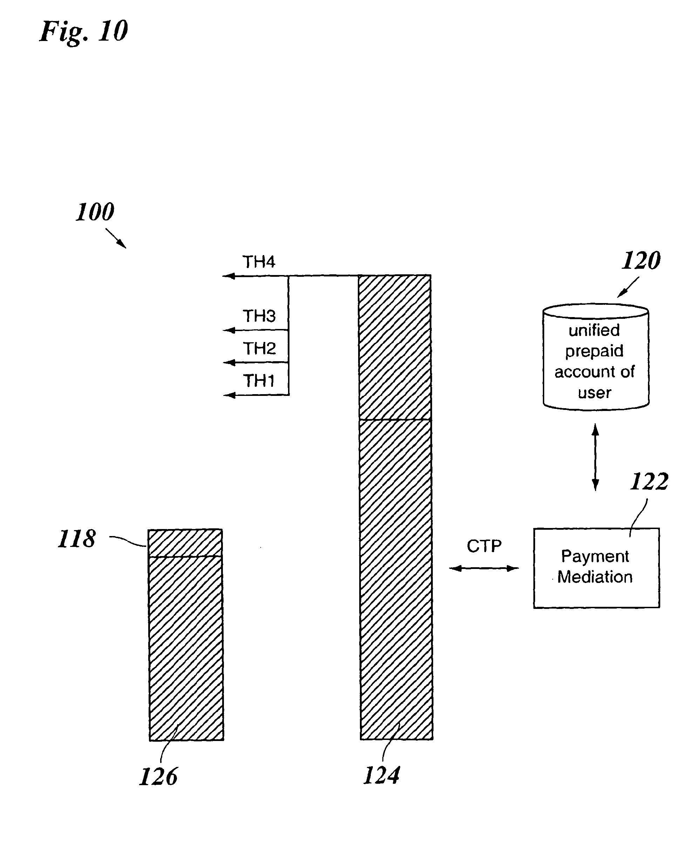

Fig. 10 shows the result of this action. It can be seen, that the contents of the register 124 has increased, and all the thresholds TH1 - TH4 have been shifted upwardly by a corresponding amount.

Whenever an event 110 or 112 occurs, the step 108 calculates the corresponding charge 118 and adds this charge to the pertinent credit counter 126. Then, it is checked, whether one of the thresholds TH1- TH4 has been exceeded. As long as the highest threshold TH4 has not been exceeded, it is decided that the credit of the user is still sufficient, and the session is continued. If the event was a packet event 112, it is decided that the packet is allowed to pass through.

When the credit counter 126 reaches the lowest threshold TH1, i.e. when the lease amount of 2.00 Euro has almost been consumed, the accumulated lease register 124 is upgraded as in Fig. 10, and the session and the data flow may continue without delay. The accumulated credit consumed by the user is reflected by the step-wise reduction of the unified prepaid account 120 of the user. Thus, in the event of data loss due to a system breakdown, the financial risk for the service provider is limited to 2.00 Euro per user.

When the user has finished his session, the difference between the contents of the register 124 and that of the credit counter 126, i.e. the amount of credit that has not been consumed, is refunded to the unified prepaid account 120. Then, the credit counter 126 and the register 124 may be reset for a next session.

If, during a session, the unified prepaid account 120 of the user becomes depleted, the request to lease another amount of 2.00 Euro to the register 124 will not be successful or at least not fully successful, i.e. the contents of the register 124 will be increased by less than 2.00 Euro or will not be increased at all. As a result, the credit counter 126 may grow beyond the lowest threshold TH1 and may successively reach the thresholds TH2 - TH4. The actions specified for the thresholds TH2 and TH3 may be warning messages, for example, to be sent to the user in order to invite him to reload his prepaid account or to switch to a cheaper profile with a lower quality of service. The ultimate threshold TH4 will be defined as a "critical" threshold and the action associated therewith will be to disconnect the user in case of a time event 110 or to block and drop the data packet in case of a packet event 112.

As long as the session continues, the contents of the register 124 and the credit counter 126 may increase infinitely. In order to prevent an overflow, it is sufficient to monitor whether the register 124 is about to reach an overflow condition, because this register is always ahead of the credit counter 126. When the overflow condition is met, the contents of both the register 124 and the credit counter 126 are reduced by the same amount, and the accounting procedure may continue without any other alterations.

While the example given above has been illustrated by way of a prepaid mode, this embodiment can be adapted to a postpaid realtime billing mode in a straightforward manner. The unified prepaid account 120 would then be replaced by a debit account of the user, and this account will be increased, for example by transferring negative lease amounts into the register 124. Correspondingly, negative charges 118 would be accumulated in the "credit counter" 126, and the order of the thresholds TH1- TH4 would be reversed. Again, the register 124 would be always ahead of the counter 126, but now in the negative direction. The definition of the credit counter 126 as described above provides sufficient flexibility for making adaptions of this kind. It will be understood however that, in case of postpaid, there may be no need for critical thresholds such as TH4, because the is no real equivalent to the depletion of a prepaid account. Nevertheless, such thresholds might be used for implementing payment ceilings or the like or else for controlling advertising breaks or the like as described in the first embodiment. It should be recalled that the real time billing system 100 described above may include all the functionality that has been described previously in conjunction with the first embodiment.

In the US patent application Serial No. US 09/999,267, the present applicant has proposed a billing system in which Internet services are identified by virtual telephone numbers, and the services are billed for by creating data records in the format of Call Detail Records (CDR) which are sent to a telephone billing system. As a result, the charges for Internet services will appear on the telephone bill and will be identified by their virtual telephone numbers. The present invention, in the postpaid mode, may readily be combined with this previously proposed invention. In this case, the communication between the real time billing system 100 and the account of the user and/or the payment mediation system 122 would be replaced by the creation of said CDR-type records.

## Claims

1. A network service switch (20) arranged for allowing or denying access of a user to at least one predetermined network service by deciding whether or not data packets are to be passed through the switch, **characterized in that** the network service switch comprises an accounting logic (100) for calculating in real-time an amount of charge (118) to be debited to the user for each individual data packet that is passed through and for debiting said amount of charge in real-time to an account (126) of said user in the accounting logic (100).

2. Method for allowing or denying access of a user to at least one predetermined network service by deciding whether or not data packets are to be passed through the switch, **characterized in that** within an accounting logic (100) within a network service switch accounts (120, 126) of the users are changed in real-time in accounting steps (108) that are triggered by predefined events (110, 112), at least one of said events (112) being the arrival of an individual data packet that is to be transmitted to or from a terminal of the user (18).

3. Method according to claim 2, comprising the steps of:
- defining at least one payment rule (106) which prescribes how a charge (118) has to be calculated for a data packet, depending on the type, origin and/or destination of said data packet.

4. Method according to claim 3, comprising the steps of:
- defining, for each active user, at least one credit counter object including at least one threshold (TH1 - TH4) with an associated threshold test condition and an action associated with each threshold, and
- upon arrival of a data packet, changing the contents of a credit counter (126) in said at least one credit counter object by the charge (118) calculated for said data packet, and
- testing, for each threshold, whether the contents of said credit counter (126) meets the threshold test condition and, when this is the case, performing said action associated with said threshold.

5. Method according to claim 4, wherein said steps of defining at least one payment rule and of defining at least one credit counter object include the definition of a plurality of payment rules and credit counter objects for different payment types.

6. Method according to claim 5, wherein at least one payment rule (106) prescribes the calculation of a plurality of charges (118) for one and the same data packet, said charges being charged to different credit counters (126).

7. Method according to any of the claims 4 to 6, wherein an action associated with a threshold traversal triggers the transfer of a payment between a payment service provider and an account of the user, said payment being a lease in the context of prepaid billing and an interim Call Detail Record (CDR) in the context of real-time postpaid billing.

8. Method according to claim 7, wherein real-time fraud protection is performed by using real-time postpaid billing instead of or in addition to conventional postpaid billing.

9. Method according to claim 7, wherein real-time payment ceiling enforcement is performed by using real-time postpaid billing instead of or in addition to conventional postpaid billing.

10. Method according to claim 7, wherein electronic bill presentment and payment (EBPP) is performed by using real-time postpaid billing instead of or in addition to conventional postpaid billing.

11. Method according to claim 7, wherein a unified billing mechanism for postpaid and prepaid services is employed, **characterized in that** a single service can be offered with a split charge that is using a payment rule with two rates including a real-time prepaid payment-type rate and a real-time postpaid payment-type rate.

12. Method according to claim 7, wherein a unified billing mechanism for postpaid and prepaid services is employed, **characterized in that** a single user can use both prepaid and postpaid billed services in the same user session, when using a minimum of 2 service units which meet payment rules that include both a real-time prepaid payment type rate and a real-time postpaid payment type rate.

13. Method according to claim 11 or 12, wherein a unified billing mechanism for postpaid and prepaid services is employed, **characterized in that** a service provider emulates conventional postpaid billing by using real-time postpaid billing in addition to real-time prepaid billing.

## Patentansprüche

1. Netzwerkvermittlungsanlage (20), eingerichtet für das Erlauben oder das Verwehren des Zugangs eines Nutzers zu mindestens einem vorbestimmten Netzdienst, indem entschieden wird, ob Datenpakete durch die Vermittlungsanlage durchgelassen werden sollen,
**dadurch gekennzeichnet, dass** die Netzdienstvermittlungsanlage eine Berechnungslogik (100) für die Echtzeit-Berechnung einer Belastungshöhe (118) enthält, die dem Nutzer belastet wird für jedes einzelne Datenpaket, welches durchgelassen wurde, und für die Echtzeit-Belastung eines Kontos (126) des Nutzers in der Berechnungslogik (100) mit der besagten Belastungshöhe.

2. Verfahren für das Erlauben oder Verwehren des Zugangs eines Nutzers zu mindestens einem vorbestimmten Netzdienst, indem entschieden wird, ob Datenpakete durch die Vermittlungsanlage durchgelassen werden sollen,
**dadurch gekennzeichnet, dass** in einer Berechnungslogik (100) innerhalb einer Netzdienstvermittlungsanlage Nutzerkonten (120, 126) in Echtzeit geändert werden in Berechnungsschritten (108), die durch vorbestimmte Ereignisse ausgelöst werden (110, 112), wobei mindestens eines dieser Ereignisse (112) die Ankunft eines einzelnen Datenpakets ist, welches zu oder von einem Endgerät des Nutzers (18) zu übertragen ist.

3. Verfahren nach Anspruch 2, enthaltend die Schritte:
- Definieren mindestens einer Bezahlregel (106), die vorschreibt, wie eine Belastung (118) zu berechnen ist für ein Datenpaket abhängig von Typ, Ursprung und/oder Ziel des besagten Datenpakets.

4. Verfahren nach Anspruch 3, enthaltend die Schritte:
- Definieren für jeden aktiven Nutzer mindestens eines Kreditzählobjektes, welches mindestens einen Schwellwert (TH1-TH4) enthält mit einer zugeordneten Schwellwertbedingung, und zu jedem Schwellwert einer zugeordneten Aktion, und
- bei Ankunft eines Datenpakets Verändern des Inhalts eines Kreditzählers (126) in besagtem mindestens einem Kreditzählobjekt, um die für das besagte Datenpaket berechnete Belastung (118), und
- Testen für jeden Schwellwert, ob der Inhalt des besagten Kreditzählers (126) die Schwellwerttestbedingung erfüllt und, wenn dies der Fall ist, Ausführen der besagten Aktion, die dem besagten Schwellwert zugeordnet ist.

5. Verfahren nach Anspruch 4, wobei die Schritte des Definierens mindestens einer Bezahlregel (106) und des Definierens mindestens eines Kreditzählobjektes die Definition einer Vielzahl von Bezahlregeln und Kreditzählobjekten für unterschiedliche Bezahltypen beinhalten.

6. Verfahren nach Anspruch 5, wobei mindestens eine Bezahlregel (106) vorschreibt, wie eine Vielzahl von Belastungen (118) für ein und dasselbe Datenpaket zu berechnen ist, wobei unterschiedliche Kreditzähler (126) mit besagten Belastungen (118) belastet werden.

7. Verfahren nach einem der Ansprüche 4 bis 6, wobei eine einer Schwellwertüberschreitung zugeordnete Aktion den Transfer einer Zahlung auslöst zwischen einem Bezahldienstleistungserbringer und einem Konto des Nutzers, wobei diese besagte Zahlung eine reservierende Verleihung (Lease) im Zusammenhang mit Vorauszahlungsanrechnungsverfahren (Prepaid-Billing-Verfahren) und eine Zwischenablesungstandsmitteilung (Interim Call Detail Record (CDR)) im Zusammenhang mit Echtzeit-Abrechnungsverfahren bei Zahlung auf Rechnung (Echtzeit-Postpaid Billing-Verfahren) darstellt.

8. Verfahren nach Anspruch 7, wobei Echtzeit-Betrugsschutz (Fraud Protection) durchgeführt wird durch Benutzung eines Echtzeit-Abrechnungsverfahrens bei Zahlung auf Rechnung (Echtzeit-Postpaid Billing Verfahren) anstelle oder zusätzlich zu herkömmlichem Abrechnungsverfahren bei Zahlung auf Rechnung (Postpaid-Billing Verfahren) .

9. Verfahren nach Anspruch 7, wobei die Einhaltung von Zahlungslimits in Echtzeit überwacht wird durch Echtzeit-Abrechnungsverfahren bei Zahlung auf Rechnung (Echtzeit Postpaid Billing Verfahren) anstelle oder zusätzlich zu herkömmlichem Abrechnungsverfahren bei Zahlung auf Rechnung (Postpaid Billing).

10. Verfahren nach Anspruch 7, wobei elektronische Rechnungslegung und Bezahlung durchgeführt wird auf Basis von Echtzeit-Abrechnungsverfahren bei Zahlung auf Rechnung (Echtzeit Postpaid Billing Verfahren) anstelle von oder zusätzlich zu herkömmlichem Abrechnungsverfahren bei Zahlung auf Rechnung (Postpaid Billing).

11. Verfahren nach Anspruch 7, wobei ein einheitliches Berechnungsverfahren benutzt wird sowohl für Dienste mit Abrechnungsverfahren bei Zahlung auf Rechnung (Postpaid services) als auch für Dienste mit Anrechnungsverfahren bei Vorauszahlung (Prepaid services),
**dadurch gekennzeichnet, dass** ein einzelner Dienst mit einer gespaltenen Belastung (split charge) angeboten werden kann, die eine Bezahlregel mit zwei Raten benutzt, einschließlich der Rate eines Vorauszahlungs-Bezahltyps (Prepaid-Bezahltyp) und einer Rate eines Bezahltyps für ein Echtzeit-Abrechnungsverfahrens bei Zahlung auf Rechnung (Postpaid-Bezahltyps).

12. Verfahren nach Anspruch 7, wobei ein einheitliches Berechnungsverfahren eingesetzt wird für Dienste mit Abrechnungsverfahren bei Zahlung auf Rechnung (Postpaid services) und für Dienste mit Anrechnungsverfahren bei Vorauszahlung (Prepaid services),
**dadurch gekennzeichnet, dass** ein einzelner Nutzer innerhalb einer Nutzungs-Sitzung (User-Session) sowohl Dienste mit Anrechnungsverfahren bei Vorauszahlung (Prepaid-Dienste) als auch Dienste mit Abrechnungsverfahren bei Zahlung auf Rechnung (Postpaid Dienste) nutzen kann, und zwar bei Nutzung von mindestens zwei Diensterbringungs-Einheiten, für die Bezahlregeln zutreffen, die sowohl eine Rate eines Bezahltyps für Echtzeit-Anrechnungsverfahren bei Vorauszahlung (Prepaid) enthalten als auch eine Rate eines Bezahltyps für Echtzeit-Abrechnungsverfahren bei Zahlung auf Rechnung (Postpaid payment type rate).

13. Verfahren nach Anspruch 11 oder 12, wobei ein einheitliches Berechnungsverfahren eingesetzt wird für Dienste mit Abrechnungsverfahren bei Zahlung auf Rechnung (Postpaid Dienste) und für Dienste mit Anrechnungsverfahren bei Vorauszahlung (Prepaid Dienste),
**dadurch gekennzeichnet, dass** ein Dienste-Erbringer ein herkömmliches Abrechnungsverfahren bei Zahlung auf Rechnung emuliert durch Nutzung eines Echtzeit-Abrechnungsverfahrens zusätzlich zu Echtzeit Anrechnungsverfahren bei Vorauszahlung.

## Revendications

1. Commutateur de services de réseau (20) agencé de façon à permettre ou à refuser l'accès d'un utilisateur à au moins un service de réseau prédéterminé en décidant si oui ou non les paquets de données doivent être transmis par l'intermédiaire de ce commutateur, **caractérisé en ce que** ce commutateur de services de réseau comprend une logique de comptabilité (100) pour calculer en temps réel un montant de frais (118) à débiter de l'utilisateur pour chaque paquet de données individuel qui est transmis et pour débiter ledit montant de frais en temps réel d'un compte (126) dudit utilisateur dans la logique de comptabilité (100).

2. Procédé pour permettre ou refuser l'accès d'un utilisateur à au moins un service de réseau prédéterminé en décidant si oui ou non les paquets de données doivent être transmis par l'intermédiaire du commutateur, **caractérisé en ce que**, au sein d'une logique de comptabilité (100) incorporée dans un commutateur de services de réseau, les comptes (120, 126) des utilisateurs sont changés en temps réel par étapes de comptabilité (108), qui sont déclenchées par des évènements prédéfinis (110, 112), au moins un desdits évènements (112) étant l'arrivée d'un paquet de données individuel qui doit être transmis à un terminal de l'utilisateur (18) ou depuis celui-ci.

3. Procédé selon la revendication 2, comprenant les étapes consistant en :
- la définition d'au moins une règle de paiement (106) qui prescrit comment des frais (118) doivent être calculés pour un paquet de données, suivant le type, l'origine et/ou la destination dudit paquet de données.

4. Procédé selon la revendication 3, comprenant les étapes consistant en :
- la définition, pour chaque utilisateur actif, d'au moins un objet compteur de crédit comprenant au moins un seuil (TH1 - TH4) avec une condition d'essai de seuil associée et une action associée à chaque seuil, et
- lors de l'arrivée d'un paquet de données, le changement du contenu d'un compteur de crédit (126) dans ledit au moins un objet compteur de crédit correspondant aux frais (118) calculés pour ledit paquet de données, et
- l'essai, pour chaque seuil, pour savoir si le contenu dudit compteur de crédit (126) satisfait la condition d'essai du seuil et, lorsque c'est le cas, l'exécution de ladite action associée audit seuil.

5. Procédé selon la revendication 4, lesdites étapes de définition d'au moins une règle de paiement et de définition d'au moins un objet compteur de crédit comprenant la définition d'une pluralité de règles de paiement et d'objets compteurs de crédits pour différents types de paiement.

6. Procédé selon la revendication 5, au moins une règle de paiement (106) prescrivant le calcul d'une pluralité de frais (118) pour un seul et même paquet de données, lesdits frais étant imputés à différents compteurs de crédit (126).

7. Procédé selon l'une quelconque des revendications 4 à 6, une action associée à une traversée de seuil déclenchant le transfert d'un paiement entre un fournisseur de services de paiement et un compte de l'utilisateur, ledit paiement étant un bail dans le contexte de la facturation à prépaiement et un enregistrement des détails d'appels (CDR) provisoire dans le contexte de la facturation à post-paiement en temps réel.

8. Procédé selon la revendication 7, une protection contre la fraude en temps réel étant assurée en utilisant une facturation à post-paiement en temps réel au lieu de, ou en plus de, la facturation à post-paiement conventionnelle.

9. Procédé selon la revendication 7, l'application du plafond de paiement en temps réel étant exécutée en utilisant une facturation à post-paiement en temps réel au lieu de, ou en plus de, la facturation à post-paiement conventionnelle.

10. Procédé selon la revendication 7, la présentation et le paiement électroniques des factures (EBPP) étant exécutés en utilisant une facturation à post-paiement en temps réel au lieu de, ou en plus de, la facturation à post-paiement conventionnelle.

11. Procédé selon la revendication 7, un mécanisme de facturation unifié pour les services prépayés et post-payés étant employé, **caractérisé en ce qu'**un seul service peut être offert avec des frais partagés, qui utilise une règle de paiement avec deux tarifs comprenant un tarif de type à paiement prépayé en temps réel et un tarif de type à paiement post-payé en temps réel.

12. Procédé selon la revendication 7, un mécanisme de facturation unifié pour les services prépayés et post-payés étant utilisé, **caractérisé en ce qu'**un seul utilisateur peut utiliser à la fois des services à facturation prépayée et post-payée dans la même séance d'utilisateur, lorsqu'il utilise un minimum de 2 unités de service qui satisfont les règles de paiement qui comprennent à la fois un tarif de type à paiement prépayé en temps réel et un tarif de type à paiement post-payé en temps réel.

13. Procédé selon les revendications 11 ou 12, un mécanisme de facturation unifié pour les services post-payés et prépayés étant employé, **caractérisé en ce qu'**un fournisseur de services émule la facturation à post-paiement conventionnelle en utilisant une facturation à post-paiement en temps réel en plus d'une facturation à prépaiement en temps réel.
